# EUROPEAN PATENT APPLICATION

(11) **EP 2 284 449 A1**
(43) Date of publication of application: **16.02.2011**
(21) Application number: 09251773.9
(22) Date of filing: 10.07.2009
(51) Int. Cl.: F24F 5/00

(54) **Temperature equalisation air supply system of natural thermal energy with intermediate thermal storage**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A temperature equalisation air supply having an intermediate thermal storage (1000) between the temperature equalizer (101) and the natural thermal matrix (100) to provide equalized temperature by utilization of natural thermal energy, wherein the intermediate thermal storage is installed between the targeting subject for temperature adjustment and the natural thermal matrix to promote the advantage of thermal energy utilization effect of the natural thermal matrix thereby reducing the required installing capacity and operating power of the conventional temperature adjusting equipment.

## Description

### BACKGROUND OF THE INVENTION

### (a) Field of the Invention

The present invention is disclosed by the systems or equipments utilizing the natural thermal matrix of stable temperature such as earth layers, earth surface, water pools, lakes and rivers of the nature for air conditioning application, wherein an innovative intermediate thermal storage is installed between the natural thermal matrix and the temperature equalizer being respectively provided with the flow duct at the two ends thereof, wherein the intermediate thermal storage has both or either one of good thermal conductivity coefficient and higher unit heat capacity ratio better than the one of peripheral surrounding of the natural thermal matrix of stable temperature, the intermediate thermal storage is constituted by solid, colloidal, liquid or gaseous state material having better thermal conductivity coefficient and higher unit heat capacity ratio to absorb the thermal energy of peripheral surrounding of natural thermal matrix of stable temperature, wherein it can store more thermal energy and has a better thermal conductivity coefficient due to its characteristics of higher unit heat capacity ratio, so that it is advantageous to release larger thermal energy through the temperature equalizer to the air passing through the temperature equalizer.

### (b) Description of the Prior art

The conventional room temperature adjusting systems such as air conditioners are normally driven by power to drive active temperature lowering equipments constituted by coolant compressors, while the heat of warming air is obtained by electricity or material combustions, so that for long time, the temperature adjustment of the space not only consumes huge energy, but also produces large quantity of pollutions as well as waste heat and wastes. Regarding above said disadvantages, the air conditioning applications by utilizing thermal energy of shallow earth surface layers has been increased day by day; however, as the thermal conductivity of shallow earth surface layer is comparably lower, the heat transfer is slow and the unit heat capacity ratio is lower that is disadvantageous to release maximum thermal energy in a short time thereby limiting the applications.

### SUMMARY OF THE INVENTION

The temperature equalization air supply system of natural thermal energy with intermediate thermal storage mainly comprises an intermediate thermal storage which is installed between the natural thermal matrix and the temperature equalizer, wherein it is **characterized in that** the two ends of the temperature equalizer are respectively provided with first flow duct and second flow duct for air flow transfer, wherein temperature of the air flow passing through the temperature equalizer is regulated and transferred to the temperature regulated space thereby making the temperature regulated space obtain the thermal energy close to the one of natural thermal matrix.

### BRIEF DESCRIPTION OF THE DRAWINGS

Fig. 1 is an application example of a conventional method utilizing the temperature equalization function between the air flow transmission duct and the natural thermal matrix for temperature adjustment on passing air flow.
Fig. 2 is an application example of a conventional method showing that the air flow transmission duct erected between the natural thermal matrix and the building is series installed with a temperature equalizer provided within the natural thermal matrix.
Fig. 3 is a main structural schematic view of the temperature equalization air supply system of natural thermal energy with intermediate thermal storage of the present invention.
Fig. 4 is a schematic view of showing that the embodiment of the present invention as shown in Fig. 3 is constituted by installing an independent temperature equalizer to the intermediate thermal storage.
Fig. 5 is a schematic view showing that the embodiment of the present invention as shown in Fig. 3 is constituted by at least two temperature equalizers in series connection by flow ducts being installed inside an intermediate thermal storage.
Fig. 6 is a schematic view showing that the embodiment of the present invention as shown in Fig. 3 is constituted by at least two temperature equalizers in parallel connection by flow ducts being installed inside an intermediate thermal storage.
Fig. 7 is a schematic view showing that the embodiment of the present invention as shown in Fig. 3 is constituted by at least three temperature equalizers in series and parallel connection by flow ducts being installed inside an intermediate thermal storage.
Fig. 8 is a schematic view showing that at least two integral combined bodies of intermediate thermal storage and temperature equalizer in the embodiment of the present invention as shown in Fig. 3 being series connected by flow ducts are dispersedly installed in the natural thermal matrix.
Fig. 9 is a schematic view showing that at least two integral combined bodies of intermediate thermal storage and temperature equalizer in the embodiment of the present invention as shown in Fig. 3 being parallel connected by flow ducts are dispersedly installed in the natural thermal matrix.
Fig. 10 is a schematic view showing that at least three integral combined bodies of intermediate thermal storage and temperature equalizer in the embodiment of the present invention as shown in Fig. 3 being series and parallel connected by flow ducts are dispersedly installed in the natural thermal matrix (100).
Fig. 11 is a brief structural schematic view of the temperature regulating system embodiment showing that thermal energy of the present invention with intermediate thermal storage is indirectly transfer through thermal storages to perform close circuit temperature adjustment on temperature regulated space.
Fig. 12 is a schematic view showing that the embodiment of the present invention as shown in Fig. 11 is constituted by installing an independent active temperature equalizer to the intermediate thermal storage.
Fig. 13 is a schematic view showing that the embodiment of the present invention as shown in Fig. 11 is constituted by at least two active temperature equalizers in series connection by flow ducts being installed inside an intermediate thermal storage.
Fig. 14 is a schematic view showing that the embodiment of the present invention as shown in Fig. 11 is constituted by at least two temperature equalizers in parallel connection by flow ducts being installed inside an intermediate thermal storage.
Fig. 15 is a schematic view showing that the embodiment of the present invention as shown in Fig. 11 is constituted by at least three temperature equalizers in series and parallel connection by flow ducts being installed inside an intermediate thermal storage.
Fig. 16 is a schematic view showing that at least two integral combined bodies of the intermediate thermal storage and the active temperature equalizer in the embodiment of the present invention as shown in Fig. 11 being series connected by flow ducts are dispersedly installed in the natural thermal matrix.
Fig. 17 is a schematic view showing that at least two integral combined bodies of the intermediate thermal storage and the active temperature equalizer in the embodiment of the present invention as shown in Fig. 11 being parallel connected by flow ducts are dispersedly installed in the natural thermal matrix.
Fig. 18 is a schematic view showing that at least three integral combined bodies of the intermediate thermal storage and the active temperature equalizer in the embodiment of the present invention as shown in Fig. 11 being series and parallel connected by flow ducts are dispersedly installed in the natural thermal matrix.
Fig. 19 is a brief structural schematic view showing that the embodiment as shown in Fig. 11 is additionally installed with an auxiliary adjusting device.
Fig. 20 is a schematic view of the embodiment showing that the intermediate thermal storage constituted by solid state or colloidal type material is installed between the natural thermal matrix and the temperature equalizer.
Fig. 21 is a schematic view of the embodiment showing that the intermediate thermal storage constituted by a closable shell filled with liquid or gaseous state or colloidal type or solid sate material inside is installed between the natural thermal matrix and the temperature equalizer.
Fig. 22 is a schematic view of the embodiment showing that at least one fluid inflow passage and at least one fluid outflow passage is disposed to Fig. 21.
Fig. 23 is a schematic view of the embodiment showing that the intermediate thermal storage constituted by an open tank with liquid state, colloidal type or solid state material inside is installed between the natural thermal matrix and the temperature equalizer.
Fig. 24 is a schematic view of the embodiment showing that at least one fluid inflow passage and at least one fluid outflow passage is disposed to Fig. 23.
Fig. 25 is a schematic view of the embodiment showing that at least one fluid inflow ditch and at least one fluid outflow ditch is disposed to Fig. 23.
Fig. 26 is a schematic view of the embodiment showing that a fluid inflow passage and a fluid inflow ditch and a fluid outflow passage and a fluid outflow ditch are simultaneously disposed to Fig. 23.
Fig. 27 is a schematic view showing that the intermediate thermal storage constituted by multiple powders like or multiple blocks like solids is installed between the natural thermal matrix and the temperature equalizer.
Fig. 28 is a schematic view of the embodiment showing that the intermediate thermal storage constituted by multiple powders like or multiple blocks like solids being enclosed by a mesh type structure is installed between the natural thermal matrix and the temperature equalizer.
Fig. 29 is a schematic view of the embodiment showing that the intermediate thermal storage constituted by multiple powders like or multiple blocks like solids being enclosed by a porous type structure is installed between the natural thermal matrix and the temperature equalizer.
Fig. 30 is a schematic view of the embodiment showing that the intermediate thermal storage constituted by multiple powders like or multiple blocks like solids being enclosed by a screen type structure is installed between the natural thermal matrix and the temperature equalizer.
Fig. 31 is a schematic view of the embodiment showing that an auxiliary radial type heat conduction device can be further installed in plane direction (2D) or 3D direction (3D) or perpendicular direction between the intermediate thermal storage (1000) for installing with the temperature equalizer (101) and the natural thermal matrix (100).
Fig. 32 is a schematic view of the embodiment showing that the present invention of a hollow structure containing internal heat conducting fillers or heat pipe structures is installed between the intermediate thermal storage (1000) for installing the temperature equalizer (101) and the natural thermal matrix (100).
Fig. 33 is a schematic view of the embodiment showing that the intermediate thermal storage constituted by solid state or colloidal type material is installed between the natural thermal matrix and the active temperature equalizer.
Fig. 34 is a schematic view of the embodiment showing that the intermediate thermal storage constituted by a closable shell filled with liquid or gaseous state or colloidal type or solid state material inside is installed between the natural thermal matrix and the active temperature equalizer.
Fig. 35 is a schematic view of the embodiment showing that at least one fluid inflow passage and at least one fluid outflow passage is disposed to Fig. 34.
Fig. 36 is a schematic view of the embodiment showing that the intermediate thermal storage constituted by an open tank with liquid state, colloidal type or solid state material inside is installed between the natural thermal matrix and the active temperature equalizer.
Fig. 37 is a schematic view of the embodiment showing that at least one fluid inflow passage and at least one fluid outflow passage is disposed to Fig. 36.
Fig. 38 is a schematic view of the embodiment showing that at least one fluid inflow ditch and at least one fluid outflow ditch is disposed to Fig. 36.
Fig. 39 is a schematic view of the embodiment showing that a fluid inflow passage and a fluid inflow ditch and a fluid outflow passage and a fluid outflow ditch are simultaneously disposed to Fig. 36.
Fig. 40 is a schematic view of the embodiment showing that the intermediate thermal storage constituted by multiple powders like or multiple blocks like solids is installed between the natural thermal matrix and the active temperature equalizer.
Fig. 41 is a schematic view of the embodiment showing that the intermediate thermal storage constituted by multiple powders like or multiple blocks like solids being enclosed by a mesh type structure is installed between the natural thermal matrix and the active temperature equalizer.
Fig. 42 is a schematic view of the embodiment showing that the intermediate thermal storage constituted by multiple powders like or multiple blocks like solids being enclosed by a porous type structure is installed between the natural thermal matrix and the active temperature equalizer.
Fig. 43 is a schematic view of the embodiment showing that the intermediate thermal storage constituted by multiple powders like or multiple blocks like solids being enclosed by a screen type structure is installed between the natural thermal matrix and the active temperature equalizer.
Fig. 44 is a schematic view of the embodiment showing that the auxiliary radial type heat conduction device is installed in plane direction or 3D direction or perpendicular direction between the intermediate thermal storage (1000) for installing the active temperature equalizer (201) and the natural thermal matrix (100).
Fig. 45 which is a schematic view of the embodiment showing that the present invention of a hollow structure containing internal heat conducting fillers or heat pipe structures is installed between the intermediate thermal storage (1000) for installing the active temperature equalizer (201) and the natural thermal matrix (100).
Fig. 46 is a schematic view of the embodiment by taking Fig. 3 of the present invention as the example showing that the intermediate thermal storage (1000) is installed within the natural thermal matrix constituted by liquid or gaseous state material being installed with a fluid mixing pump (214) thereby allowing liquid or gaseous state material to be pumped by the fluid mixing pump (214) to produce isothermal effect on the temperature equalizer (101).
Fig. 47 is a schematic view of the embodiment by taking Fig. 11 of the present invention as the example showing that the intermediate thermal storage (1000) is installed within the natural thermal matrix constituted by liquid or gaseous state material being installed with a fluid mixing pump (214) thereby allowing liquid or gaseous state material to be pumped by the fluid mixing pump (214) to produce temperature equalization effect on the active temperature equalizer (201).
Fig. 48 is a schematic view of the embodiment by taking Fig. 3 of the present invention as the example showing that the intermediate thermal storage (1000) is not installed while the temperature equalizer (101) is directly installed within the natural thermal matrix (100) constituted by liquid or gaseous state material being installed with a fluid mixing pump (214) thereby allowing liquid or gaseous state material to be pumped by the fluid mixing pump (214) to produce temperature equalization effect on the temperature equalizer (101).
Fig. 49 is a schematic view of the embodiment by taking Fig. 11 of the present invention as the example showing that the intermediate thermal storage (1000) is not installed while the active temperature equalizer (201) is directly installed within the natural thermal matrix (100) constituted by liquid or gaseous state material being installed with a fluid mixing pump (214) thereby allowing liquid or gaseous state material to be pumped by the fluid mixing pump (214) to produce temperature equalization effect on the active temperature equalizer (201).

### DESCRIPTION OF MAIN COMPONENT SYMBOLS

100: Natural thermal matrix
101: Temperature equalizer
102: First flow duct
103: Second flow duct
104: Pumping device
106, 206: Filtrating device
107, 207: Flow rate adjusting device
108, 208, 308: Operative control unit
109, 209: Auxiliary adjusting device
111: Fluid inflow passage
112: Fluid outflow passage
113: Fluid inflow ditch
114: Fluid outflow ditch
201: Active temperature equalizer
202: Thermal fluid transmission piping
203: Thermal transmission fluid
204: Liquid pump
205: Passive temperature equalized body
214: Fluid mixing pump
1000: Intermediate thermal storage
1001: Closable shell body
1002: Tank type shell body
1003: Mesh type structure
1004: Porous type structure
1005: Screen type structure
1081: Hazardous gas detecting device
1082: Temperature detecting device
1083, 2083: Flow meter
1084: Gaseous matter adding device
1090: Moisture regulating device
1091: Water discharge device
2000: Auxiliary radial type heat conduction device
2001: Auxiliary radial type heat conduction device constituted by the hollow structure containing heat conducting fillers or heat pipe structures

### DETAILED DESCRIPTION OF THE PREFERRED EMBODIMENTS

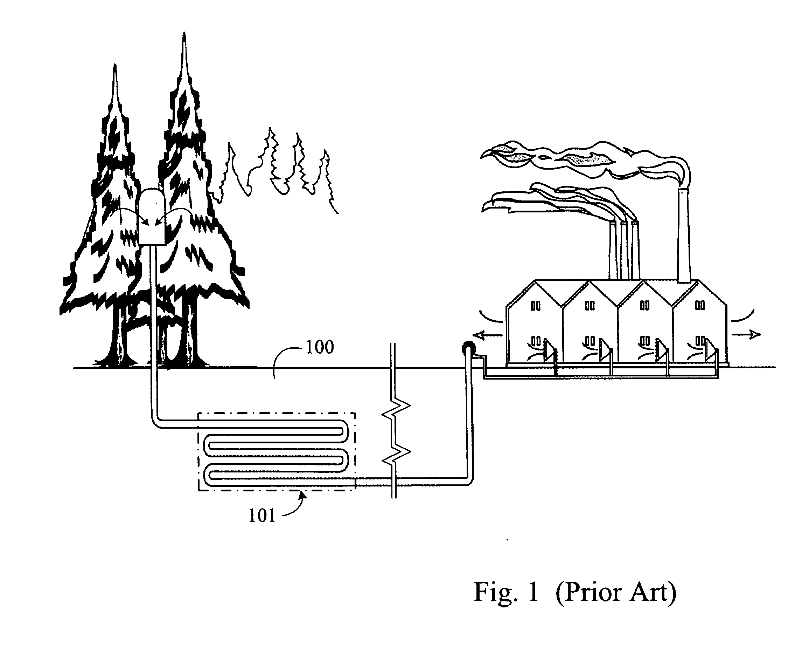

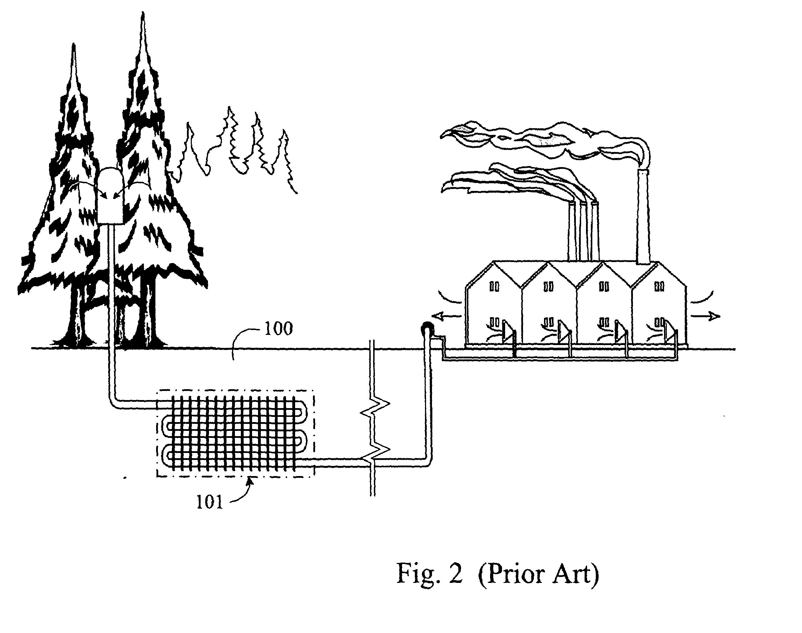

As is well-known, the shallow surface layer of earth at a proper depth has a large heat capacity unaffected by surface temperature no matter in winter or summer thereby forming a shallow layer thermal storage. Similarly, sea water, lakes and rivers at certain depths also have a stable temperature and huge heat capacity, wherein said natural thermal matrix (100) of stable temperature has a huge heat capacity which is therefore unified called natural thermal matrix (100) in this application. The natural thermal matrix (100) is at relatively lower temperature in comparison with the surrounding temperature on earth surface in summer times, such as that river bottom temperature seldom exceeds over 20°C and the earth layer temperature of depth 3∼5 meters is about 18°C in summer times. For high altitude area in winter times, when the earth surface temperature is dropped to more than 10 degrees below zero, the temperature of above said natural thermal matrix (100) is still above zero degree with around 1∼7°C at water bottom and 9°C at earth layer of 5 meters depth. Therefore, it is often seen that ducts are erected between above said natural thermal matrix (100) and buildings to transport fresh air, wherein the air transmission duct is made of heat conductive material to constitute a temperature equalizer (101) thereby producing temperature equalization effect with the natural thermal matrix to perform temperature regulation on the passing air flows (as shown in Fig. 1) before entering into temperature regulated space thereby constituting a low cost, low energy consumption, low pollution temperature regulation and air supply system to temperature regulated space. Besides, it is often seen that the air transmission ducts erected between natural thermal matrix (100) and buildings is series installed with an temperature equalizer (101) of fin type heat conducting structure (as shown in Fig. 2) to obtain a better temperature regulation effect. However, the thermal energy transmission capacity of the structures shown in Figs. 1 & 2 is hindered by the following factors:
(1) As is well-known, thermal energy transmission from natural thermal matrix is proportional to the transfer area at the same temperature difference and same unit time while the sizes of air flow transmission ducts or temperature equalizer are related to the cost, therefore if the temperature equalizer is made larger then the cost is high, but if the temperature equalizer is made smaller, then the contact area with natural thermal matrix is limited that is disadvantageous to thermal energy transmission;
(2) Although total stored heat capacity of natural thermal matrix is large, the thermal energy transmission is slow due to poor thermal conductivity coefficient; when air flow passing through air flow ducts or the temperature equalizer is large, surrounding temperature near to the ducts or the temperature equalizer of natural thermal matrix quickly approaches the air flow temperature, while thermal energy at faraway locations from the duct or the temperature equalizer is not fully complemented due to slow thermal energy transmission thereby lowering down the temperature regulation effect of the system.

The temperature equalization air supply system of natural thermal energy with intermediate thermal storage of the present invention is an innovative design aiming to improve the above said imperfections, wherein it mainly comprises that an intermediate thermal storage is installed between natural thermal matrix and temperature equalizer, both or either one of the thermal conductivity coefficient and unit heat capacity ratio is better than the one of surrounding natural thermal matrix, wherein the air flow inlet and outlet of the temperature equalizer of intermediate thermal storage are respectively provided with a first flow duct for incoming air and a second flow duct for discharge air for the air flow transmission ducts thereby allowing the incoming fresh air delivered by first flow duct to pass through the temperature equalizer for temperature regulation, then is transferred by the second flow duct to the temperature regulated space for mixing with the indoor air inside the temperature regulated space so as to adjust the temperature in the temperature regulated space, wherein the transferred air flow is delivered by the main pump or can be further selectively delivered by an optionally installed shunt pump, and the intermediate thermal storage is installed between the natural thermal matrix and the temperature equalizer to allow the intermediate thermal storage to absorb the thermal energy of natural thermal matrix and to release heat to the temperature equalizer. Furthermore, if above said first flow duct and second flow duct for air flow transmission ducts have enough lengths to be housed inside the intermediate thermal storage, then the temperature equalizer can be omitted while the above said ducts are made of material with good thermal conductivity coefficient to be erected inside the intermediate thermal storage so as to constitute the temperature equalization function, through the additionally installed intermediate thermal storage to expand the heat transmission area with the natural thermal matrix, and further through the good unit heat capacity ratio and the better thermal conductivity coefficient to store the thermal energy from natural thermal matrix in the intermediate thermal storage with a higher density thereby promoting the thermal energy transferring effect of the air flow ducts erected inside the intermediate thermal storage or the temperature equalizer.

The innovative system has better applications at places of intermittent use, such as the building temperature adjusting air supply systems for schools, offices, or public places, or households, wherein when the system is stopped, the thermal energy of natural thermal matrix is slowly and continuously transferred to the intermediate thermal storage with better unit heat capacity ratio and heat conductivity coefficient; when the system is operating, the accumulated thermal energy in the intermediate thermal storage is released in a shorter time to quickly adjust the temperature of air flow passing through the temperature equalizer for further delivery to the temperature regulated space while the intermediate thermal storage continuously receives thermal energy from the natural thermal matrix, so that the effect of system thermal energy supply can be further promoted.

The design embodiment of the invention is described in the following:

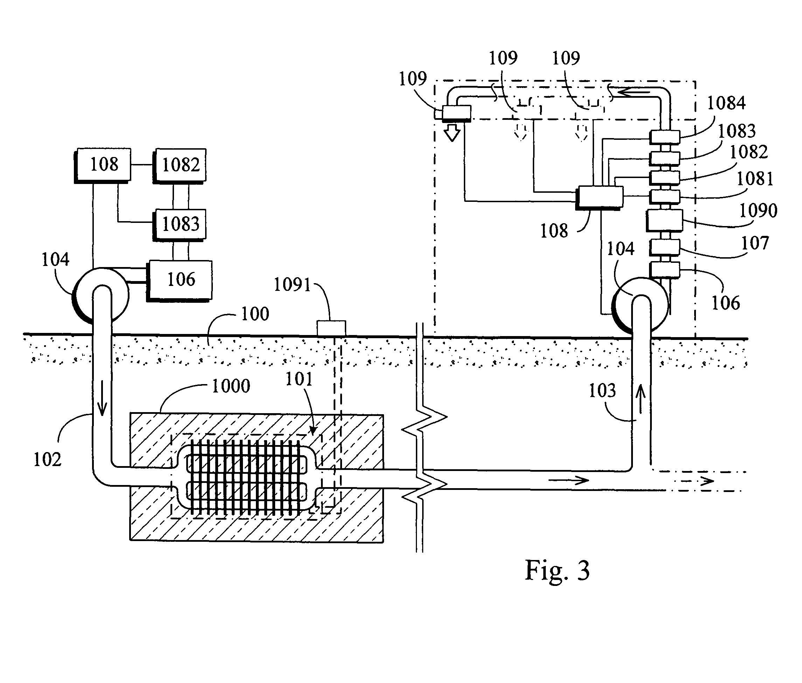

Fig. 3 is a main structural schematic view of the temperature equalization air supply system of natural thermal energy with intermediate thermal storage of the present invention, wherein Fig. 3 is mainly comprises:
   - An temperature equalizer (101): it is constituted by heat conductors having internal single flow circuit or multiple flow circuits in parallel connections, wherein one or more than one temperature equalizer (101) in series connection, parallel connection or series and parallel connection can be optionally installed inside, or integrally combined with, or neighborly combined with the intermediate thermal storage (1000), wherein the intermediate thermal storage (1000) is installed between the temperature equalizer (101) and the natural thermal matrix (100). The temperature equalizer (101) is made of material with good thermal conductivity coefficient, wherein the inside and outside heat absorbing surface and heat releasing surface appear in smooth flat surfaces or in particular intercrossed shapes, or in particular bended curvilinear structures; or the temperature equalizer (101) can be made of material with good thermal conductivity coefficient and constituted by linear or bended curve shaped flow ducting structures; or the temperature equalizer (101) can be optionally made with outwardly extended fin or column shaped heat conducting structures at the exterior thereof as needed, or is made with inwardly extended fin or column shaped heat conducting structures in the interior thereof as needed, thereby promoting the temperature absorption and release effects, wherein the temperature equalizer (101) is made with at least one inlet and at least one outlet for respectively connecting the first flow duct (102) and the second flow duct (103), etc..

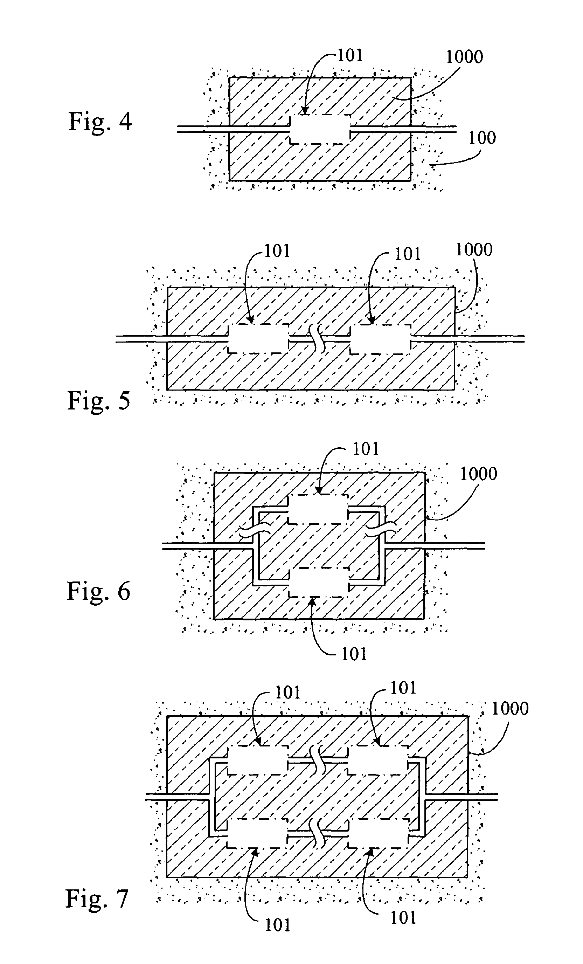

Fig. 4 is a schematic view of showing that the embodiment of the present invention as shown in Fig. 3 is constituted by installing an independent temperature equalizer (101) to the intermediate thermal storage (1000).
Fig. 5 is a schematic view showing that the embodiment of the present invention as shown in Fig. 3 is constituted by at least two temperature equalizers (101) in series connection by flow ducts being installed inside an intermediate thermal storage (1000).
Fig. 6 is a schematic view showing that the embodiment of the present invention as shown in Fig. 3 is constituted by at least two temperature equalizers (101) in parallel connection by flow ducts being installed inside an intermediate thermal storage (1000).
Fig. 7 is a schematic view showing that the embodiment of the present invention as shown in Fig. 3 is constituted by at least three temperature equalizers (101) in series and parallel connection by flow ducts being installed inside an intermediate thermal storage (1000).
   - The first flow duct (102): It is constituted by at least one tubular flow duct for connection to the inlet of temperature equalizer (101) for transferring air into the temperature equalizer (101) thereby allowing the air to appear approaching to the temperature of natural thermal matrix (100); wherein said air is taken from the external surrounding area of the inlet of first flow duct (102);
   - An intermediate thermal storage (1000): It is constituted by the temperature equalizer (101) being made of material different from the natural thermal matrix at the peripheral outside thereof, wherein it has at least one intermediate thermal storage (1000) being integrally combined, assembled or neighborly installed with the temperature equalizer (101), or being filled in between the surroundings of one or several temperature equalizers (101) in series connection, parallel connection or series and parallel connection and the natural thermal matrix (100) at the peripheral outside thereof, wherein two or more than two integral combined bodies of the temperature equalizer (101) and the intermediate thermal storage (1000) are dispersedly installed within the natural thermal matrix (100) being constituted by solid or liquid state thermal storages such as earth layers, earth surfaces, pools, lakes, rivers, deserts, ice bergs, etc. of larger stable thermal storing capacities, while both or either one of the thermal conductivity coefficient and unit heat capacity ratio of the material of intermediate thermal storage (1000) are better than the one of the peripheral outside natural thermal matrix (100) of the intermediate thermal storage (1000), wherein the intermediate thermal storage being constituted by solid, colloidal, liquid or gaseous state material can be directly installed within natural thermal matrix (100), or it can be matchingly further installed with a container type shell structure of good thermal conductivity coefficient at the peripheral outside thereof according to selected material for thermal storage, or according to structural or environmental requirements; or the mesh, screen or porous type separation structure constituted by material of good thermal conductivity coefficient can be installed to limit or separate the related positions within the space between the intermediate thermal storage (1000) and the natural thermal matrix (100) to favor heat conduction; wherein heat conducting surfaces between the above said thermal storage material, natural thermal matrix (100), and temperature equalizer (101) may appear in smooth flat surfaces or in particular intercrossed shapes, or in particular outwardly extended fin or column type structures in order to promote the heat conductivity effect, while due to characteristics of the intermediate thermal storage having better thermal conductivity coefficient and better unit heat capacity ratio, larger heat capacity of thermal energy can be stored by the intermediate thermal storage (1000) of higher unit heat capacity ratio to transfer maximum thermal energy to the temperature equalizer (101) under the conditions of same unit time and same temperature difference.

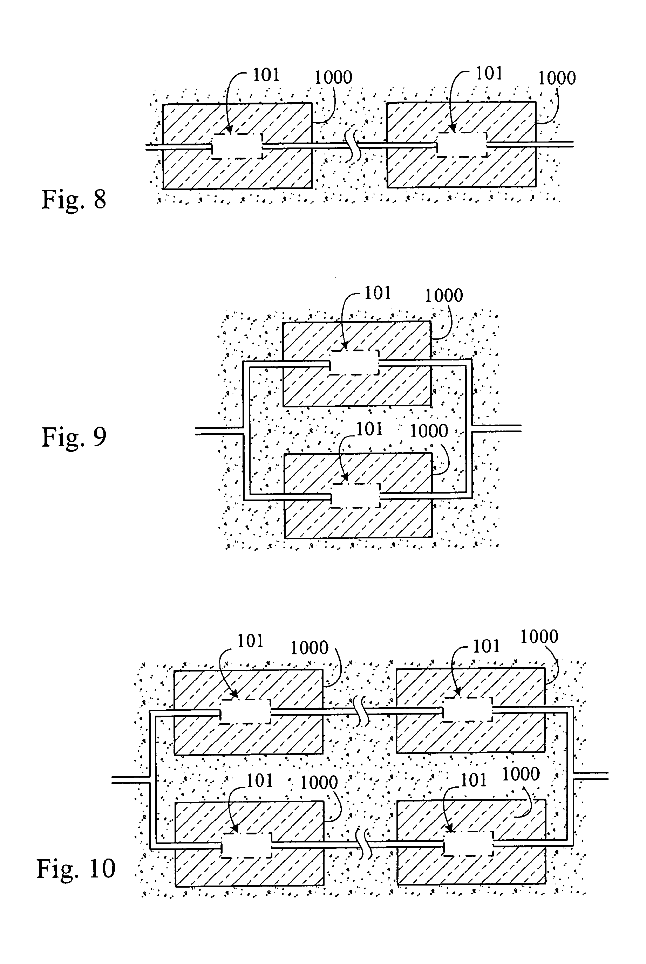

Fig. 8 is a schematic view showing that at least two integral combined bodies of intermediate thermal storage (1000) and temperature equalizer (101) in the embodiment of the present invention as shown in Fig. 3 being series connected by flow ducts are dispersedly installed in the natural thermal matrix (100).
Fig. 9 is a schematic view showing that at least two integral combined bodies of intermediate thermal storage (1000) and temperature equalizer (101) in the embodiment of the present invention as shown in Fig. 3 being parallel connected by flow ducts are dispersedly installed in the natural thermal matrix (100).
Fig. 10 is a schematic view showing that at least three integral combined bodies of intermediate thermal storage (1000) and temperature equalizer (101) in the embodiment of the present invention as shown in Fig. 3 being series and parallel connected by flow ducts are dispersedly installed in the natural thermal matrix (100).
   - The second flow duct (103): It is constituted by at least one tubular flow duct for connection to the outlet of the temperature equalizer (101) for transferring air from at least one outlet of the temperature equalizer (101) through the at least one outlet of the second flow duct (103) to enter at least one temperature regulated space including indoors of the building or a room, the structure itself, or the open space;
   - A pumping device (104): The pumping device (104) is installed to connect every first flow duct (102), every second flow duct (103), or on both of the first flow duct (102) and second flow duct (103) so as to pump air through the connected first flow duct (102), the temperature equalizer (101) and the connected second flow duct (103) to enter the temperature regulated space; wherein the pumping device is constituted by the power pump driven by rotational mechanical power, or driven by the rotational electromagnetic effect of electric motor, and relevant operative control interface for on/off or flow adjustment or is constituted by a pneumatic pump driven by natural wind power or air flow of temperature difference.

The major structure of the temperature equalization air supply system of natural thermal energy with intermediate thermal storage as described above can be further optionally installed with the following relevant auxiliary devices as needed including that the hazardous gas detecting device can be optionally installed as required at the fresh air inlet and outlet; or can be further optionally installed with the filtrating device with purification function, or the flow rate adjusting device, or the hazardous gas detecting device, or the temperature detecting device or the flow meter, etc. as needed; or can be further optionally installed with the gaseous matter adding device for adding useful gases or aromatic gaseous matters as needed; or can be optionally installed with the auxiliary adjusting device, or the moisture regulating device or the water discharge device, etc; wherein the relevant auxiliary devices include:
- A filtrating device (106): the filtrating device is constituted by air flow filtrating structures being capable of dismantled for dirt-removal cleaning, such as activated carbon filters to avoid piping blockage after long time use and for easy cleaning, wherein it is installed at the air suction inlet or discharge outlet and is constituted by filtrating devices including dust filtering mesh and hazardous gas filtrating devices such as filtrating devices containing activated carbons, etc.; wherein this device can be optionally installed as needed;
- A flow rate adjusting device (107): The fresh air release rate can be operatively controlled by manual or mechanical power as required, wherein pumping air flow discharged by the pump can be adjusted by the adjusting device, or it can be constituted by valves or gate device to adjust air flow at the discharge outlet; wherein the device can be optionally installed as needed;
- A hazardous gas detecting device (1081): It is installed at the air suction inlet and discharge outlet for detecting harmful gases to living beings such as human bodies, animals and plants or to articles in the temperature regulated space so as to send out messages; wherein this device can be optionally installed or not installed as needed;
- A temperature detecting device (1082): It is installed in the temperature regulated space for detecting temperature or is installed at the air flow inlet or outlet for detecting temperature so as to send out messages; wherein this device can be optionally installed or not installed as needed;
- A flow meter (1083): It is used to accumulatively calculate metering record of fresh air flow so as to display and send out messages for flow control or collecting fees, or for statistic management reference; wherein this device can be optionally installed or not installed as needed;
- A gaseous or micro-powder matter adding device (1084): It is constituted by an adding device being operatively controlled by manual or mechanical power, or electric signal to send in gaseous matters beneficial to human bodies, animals or plants to the temperature regulated space, or to send in micro-powdered matters or liquid mists carried by air flow, or to send in gaseous matters, micro-powdered matters or liquid mists beneficial to the conservation of articles, or to send in smell detectable gaseous matters, micro-powdered matters, or liquid mists, wherein this device is installed at the air flow inlet or first flow duct (102), or installed at the temperature equalizer (101), or installed at the second flow duct (103), or installed at the air flow outlet, or installed at the interior or external of the temperature regulated space; this device can be optionally installed or not installed as needed;
- An auxiliary adjusting device (109): If the temperature of the temperature equalizer (101) does not reach desired value, an auxiliary adjusting device (109) can be additionally installed on the route from the temperature equalizer (101) outlet via the second flow duct (103) to the outlet for entering temperature regulated space, or the auxiliary adjusting device (109) can be further installed in the temperature regulated space thereby providing adjustment on the air flow entering temperature regulated space for temperature increase or decrease; the auxiliary adjusting device (109) is constituted by an auxiliary temperature increase device with heating function, or cooling device with temperature reducing function, or temperature adjusting device with both functions, wherein this device can be optionally installed or not installed as needed;
- A moisture regulating device (1090): Beside the interior of air circuit constituted by the first flow duct (102) or the second flow duct (103) and the interior of temperature equalizer (101) can be optionally coated with desiccant material, the moisture regulating device (1090) can be further installed to eliminate, reduce or increase moistures, while the moisture can be manually operated or automatically modulated through moisture detection and setting; wherein this device can be optionally installed or not installed as needed;
- A water discharge device (1091): It is constituted by the pump and water discharge piping to draw out accumulated water inside the air flow circuit constituted by the first flow duct (102) or the second flow duct (103), or accumulated water inside the temperature equalizer (101); wherein this device can be optionally installed or not installed as needed;
- An operative control unit (108): It is constituted by the electromechanical device, electronic circuit device, microprocessor as well as relevant software and operating interface circuits, wherein besides of the operative function of temperature adjustment and air delivery performed by the operative control system on the temperature regulated space, one or more than one functions can be added as needed, including: 1) The safety protection operative control function is through connection to the hazardous gas detecting device (1081) installed at the inlet and every discharge outlet for sending out alarm and other emergency treatments such as cutting off gas flow, etc. when hazardous gas exists and exceeds over monitored values, wherein this hazardous gas detecting device is installed at input end and output end to detect hazardous gas inside the temperature regulated space; 2) It is for connection to the temperature detecting device (1082) and the flow meter (1083) for recording fresh air flow measurements and display functions to operatively control the pumping device (104), flow rate adjusting device (107) and auxiliary adjusting device (109) so as to modulate the temperature and inlet air flow on the temperature regulated space; 3) It is used to operatively control the gaseous matter adding device (1084) to add gaseous matters beneficial to human bodies, animals or plants, or to add health care products or medicines carried by air flow, or to add gaseous matters, micro-powdered matters beneficial to conservation of articles, or to add smell detectable gases; 4) It is used to operatively control the moisture regulating device (1090) for adjusting the moisture of the first flow duct (102) at air flow inlet or in the course of transferring fluid, the temperature equalizer (101), the second flow duct (103) at air flow outlet and the temperature regulated space; 5) It is used to operatively control the water discharge device (1091) to discharge the accumulated water inside the first flow duct (102), the temperature equalizer (101) and the second flow duct (103); wherein this device can be optionally installed or not installed.

The aforesaid gaseous matter adding device (1084) of the temperature equalization air supply system of natural thermal energy with intermediate thermal storage as shown in Fig. 1 not only can be applied to the temperature equalization air supply system with an intermediate thermal storage, but also can be applied to the conventional temperature equalization air supply system of natural thermal energy without installation of the intermediate thermal storage, or applied to air supply systems for general breeding warm rooms or warehouses, so as to send in gaseous matters beneficial to human bodies, animals or plants, or to send in micro-powdered matters or liquid mists carried by air flow, or to send in gaseous matters, micro-powdered matters or liquid mists beneficial to conservation of articles, or to send in smell detectable gaseous matters, micro-powdered matters, or liquid mists.

The temperature equalization air supply system of natural thermal energy with intermediate thermal storage can also be installed in the temperature difference environment between the temperature regulated space being installed with the conventional temperature adjusting device and the outside surrounding to constitute a gradual temperature difference type separation, including:
- The required temperature by temperature regulated space is higher than the one of air flow entering temperature regulated space after passing through the temperature equalizer (101) for temperature adjustment, while when the temperature of air flow after passing through the temperature equalizer (101) is higher than the one of inlet air flow, then this system constitutes a preheating function on the air flow; or
- The required temperature by temperature regulated space is lower than the one of air flow entering temperature regulated space after passing through the temperature equalizer (101) for temperature adjustment, while when the fresh air temperature after passing through the temperature equalizer (101) is lower than the one of inlet air flow, then this system constitutes a pre-cooling function on the air flow.

As terminal output air flow of the temperature equalization air supply system of natural thermal energy with intermediate thermal storage forms a positive pressure on the temperature regulated space and the environment, besides of temperature adjustment and fresh air supply, it simultaneously also possesses the following one or more than one application functions, including:
(1) If the selected temperature regulated space is indoors of a building or a room for the temperature equalization air supply system of natural thermal energy with intermediate thermal storage, when outdoor fresh air is introduced into indoors of building, the indoor atmosphere of the temperature regulated space forms a positive pressure to discharge air outwardly thereby having the function of making outdoor dusts and air pollutions difficultly enter the indoors of the temperature regulated space;
(2) If the selected temperature regulated space is an open space within a city for the temperature equalization air supply system of natural thermal energy with intermediate thermal storage, when fresh air outside the city is introduced to the open space of the city, besides of temperature adjustment and fresh air supply, the whole city also forms an outwardly expanding positive pressure air flow thereby providing improving functions on high sky air stagnation phenomenon or air quality worsening phenomenon such as dust storms;
(3) If the selected temperature regulated space and the external peripheral surrounding of the air flow entrance to the first flow duct (102) are respectively belong to different climate types for the temperature equalization air supply system of natural thermal energy with intermediate thermal storage, then beside of temperature adjustment, the air supply flow can also be micro-adjusted according to climate conditions;
(4) If the selected temperature regulated space is indoors of a house or a warehouse, or is the indoor space, semi-closed space or open area for planting or breeding plants, breeding animals or aquatic products for the temperature equalization air supply system of natural thermal energy with intermediate thermal storage, then beside of temperature adjustment, it can be through supply of air flow to send in gaseous matters beneficial to human bodies, animals or plants, or to send in micro-powdered matters or liquid mists carried by air flow, or to send in gaseous matters, or micro-powdered matters or liquid mists carried by air flow beneficial to conservation of articles, or to send in smell detectable gaseous matters, or micro-powdered matters, or liquid mists carried by air flow;

When the temperature equalization air supply system of natural thermal energy with intermediate thermal storage is applied to temperature adjustment and air change of the space, it can be further made to the following embodiments, including:
- The fresh air is pumped to pass through the temperature equalizer (101) enclosed by the intermediate thermal storage (1000) being buried in, or settled to, or hung by or floated on the sea, or lakes, or water pools, or rivers or man-made water basins for providing fresh air supply to and temperature adjustment on the ship cabins or other equipments;
- The fresh air is pumped to pass through the temperature equalizer (101) enclosed by the intermediate thermal storage (1000) being buried in, or settled to, or hung by and or floated on the sea, or lakes, or water pools, or rivers or man-made water basins for providing fresh air supply to and temperature adjustment on the building space on land;
- The fresh air is pumped to pass through the temperature equalizer (101) enclosed by the intermediate thermal storage (1000) buried under earth layers for providing fresh air supply to and temperature adjustment on the building space on land;

The following effectiveness can be obtained from the above system:
1. The intermediate thermal storage (1000) enclosing the temperature equalizer (101) is installed between the temperature equalizer (101) and the natural thermal matrix (100), wherein the intermediate thermal storage (1000) is made of the material having the characteristics with both or either of the good thermal conductivity coefficient and larger unit heat capacity ratio better than the ones of its peripheral surrounding natural thermal matrix (100) of stable temperature, and is continuously absorbing and storing thermal energy of the natural thermal matrix (100) until it is saturated thereby more quickly providing the thermal energy of larger heat capacity to the temperature equalizer (101);
2. Only early stage fixed equipment cost and energy for succeeding pumping power are needed to provide fresh air supply and temperature adjusting functions on the particular temperature regulated space so as to reduce required energy;
3. As fresh air and thermal energy are delivered to the temperature regulated space of the indoors of the building, the supplied fresh air is beneficial to human heath and the positive pressure drives air flow to the outdoors thereby reducing the possibility of polluted air or dusts entering indoors;
4. The open space in the communities, or cities or schools is the temperature regulated space for receiving fresh air input and thermal energy transfer, wherein the supplied fresh air is beneficial to human health and produces an integral positive pressure air flow dissipating to the peripheral surroundings thereby making the stagnant polluted air to expand outwardly more quickly.

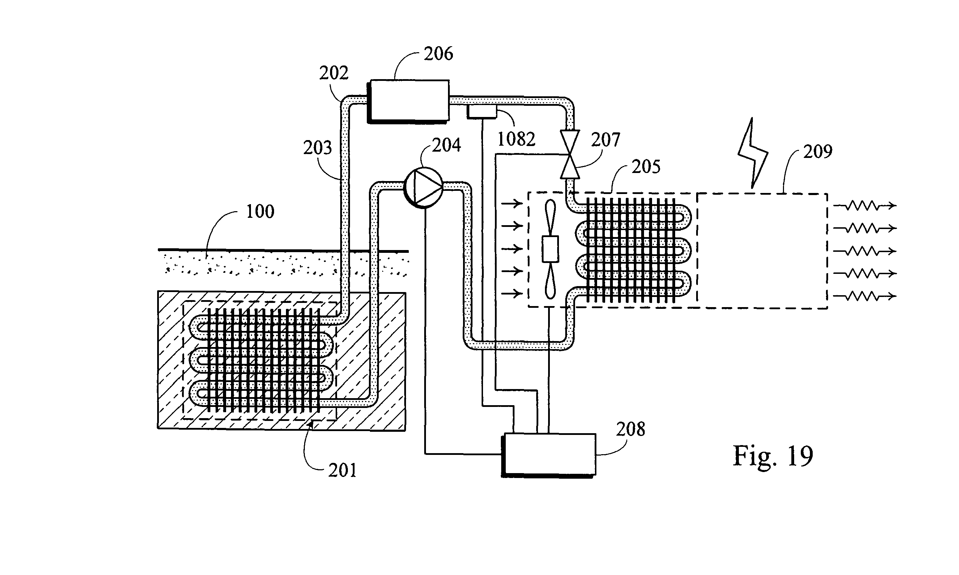

The thermal energy of the natural thermal matrix can be further employed by the temperature equalization air supply system of natural thermal energy with intermediate thermal storage to indirectly adjust temperature of the air flow delivered to the temperature regulated space thereby achieving temperature adjustment on the indoor and outdoor spaces.

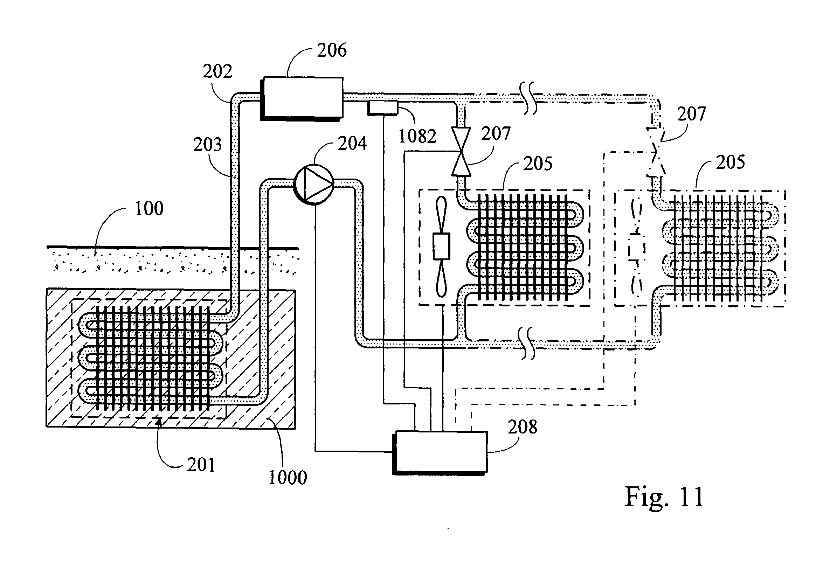

Fig. 11 is a brief structural schematic view of the temperature regulating system embodiment showing that thermal energy of the present invention with intermediate thermal storage is indirectly through transfer of thermal storages to perform close circuit temperature adjustment on temperature regulated space, wherein the figure mainly comprises the following:
   - An active temperature equalizer (201): It is constituted by heat conductors having internal single flow circuit or multiple flow circuits in parallel connections, wherein one or more than one active temperature equalizer (201) in series connection, parallel connection or series and parallel connection can be optionally installed inside, or integrally combined with, or neighborly combined with the intermediate thermal storage (1000), wherein the intermediate thermal storage (1000) is installed between the active temperature equalizer (201) and the natural thermal matrix (100); the active temperature equalizer can be made of material with good thermal conductivity coefficient, wherein the inside and outside heat absorbing surface and heat releasing surface appear in smooth flat surfaces or in particular intercrossed shapes, or in particular bended curvilinear structures, or the active temperature equalizer (201) can be made of material with good thermal conductivity coefficient and constituted by linear or bended curve shaped flow piping structures, or the active temperature equalizer (201) can be optionally made with outwardly extended fin or column shaped heat conducting structures at the exterior thereof, or is made with inwardly extended fin or column shaped heat conducting structures in the interior thereof thereby promoting the temperature absorption and release effects, wherein the active temperature equalizer (201) is made with at least one inlet and at least one outlet for respectively connecting the thermal fluid transmission piping (202) and is through driving the fluid pump (204) to pump the thermal transmission fluid (203), so that the thermal transmission fluid (203) is circulated between the active temperature equalizer (201) and the passive temperature equalized body (205) for thermal energy transfer.

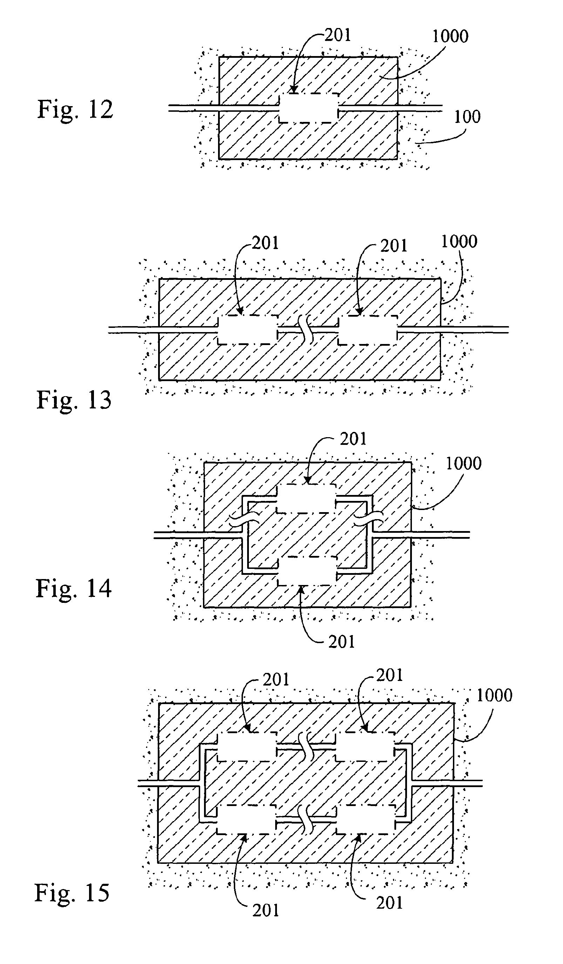

Fig. 12 is a schematic view showing that the embodiment of the present invention as shown in Fig. 11 is constituted by installing an independent active temperature equalizer (201) to the intermediate thermal storage (1000).
Fig. 13 is a schematic view showing that the embodiment of the present invention as shown in Fig. 11 is constituted by at least two active temperature equalizers (201) in series connection by flow ducts being installed inside an intermediate thermal storage (1000).
Fig. 14 is a schematic view showing that the embodiment of the present invention as shown in Fig. 11 is constituted by at least two active temperature equalizers (201) in parallel connection by flow ducts being installed inside an intermediate thermal storage (1000).
Fig. 15 is a schematic view showing that the embodiment of the present invention as shown in Fig. 11 is constituted by at least three active temperature equalizers (201) in series and parallel connection by flow ducts being installed inside an intermediate thermal storage (1000).
   - An intermediate thermal storage (1000): It is made of material different from the active temperature equalizer (201) and the natural thermal matrix (100) at the peripheral outside thereof, wherein it has at least one intermediate thermal storage (1000) being integrally combined, assembled or neighborly installed with the active temperature equalizer (201), or being filled in between the surroundings of one or several active temperature equalizers (201) in series connection, parallel connection or series and parallel connection and the natural thermal matrix (100) at the peripheral outside thereof, wherein when the number of the integral combined body of the active temperature equalizer (201) and the intermediate thermal storage (1000) is two or more than two, said integral combined bodies are dispersedly installed within the natural thermal matrix (100) being constituted by solid or liquid state thermal storages such as earth layers, earth surfaces, pools, lakes, rivers, deserts, ice bergs, etc. of larger stable thermal storing capacities, while both or either one of the thermal conductivity coefficient and unit heat capacity ratio of the material of the intermediate thermal storage (1000) are better than the one the peripheral outside natural thermal matrix (100) of the intermediate thermal storage (1000), wherein the intermediate thermal storage being constituted by solid, colloidal, liquid or gaseous state thermal storage material can be directly installed within the natural thermal matrix (100), or it can be matchingly further installed with a container type shell structure of good thermal conductivity coefficient at the peripheral outside thereof according to selected material for thermal storage, or according to structural or environmental requirements; or the mesh, screen or porous type separation structure constituted by material of good thermal conductivity coefficient can be installed to limit or separate the related positions within the space between the intermediate thermal storage (1000) and the natural thermal matrix (100) to favor heat conduction; wherein heat conducting surfaces between the above said thermal storage material, natural thermal matrix (100), and active temperature equalizer (201) can be in smooth flat surfaces or in particular intercrossed shapes, or in particular outwardly extended fin or column type structures in order to promote the heat conductivity effect, while due to characteristics of the intermediate thermal storage having better thermal conductivity coefficient and better unit heat capacity ratio that facilitating the absorption of thermal energy from the natural thermal matrix of stable temperature, larger heat capacity of thermal energy can be stored by the intermediate thermal storage (1000) to transfer maximum thermal energy to the active temperature equalizer (201) under the conditions of same unit time and same temperature difference.

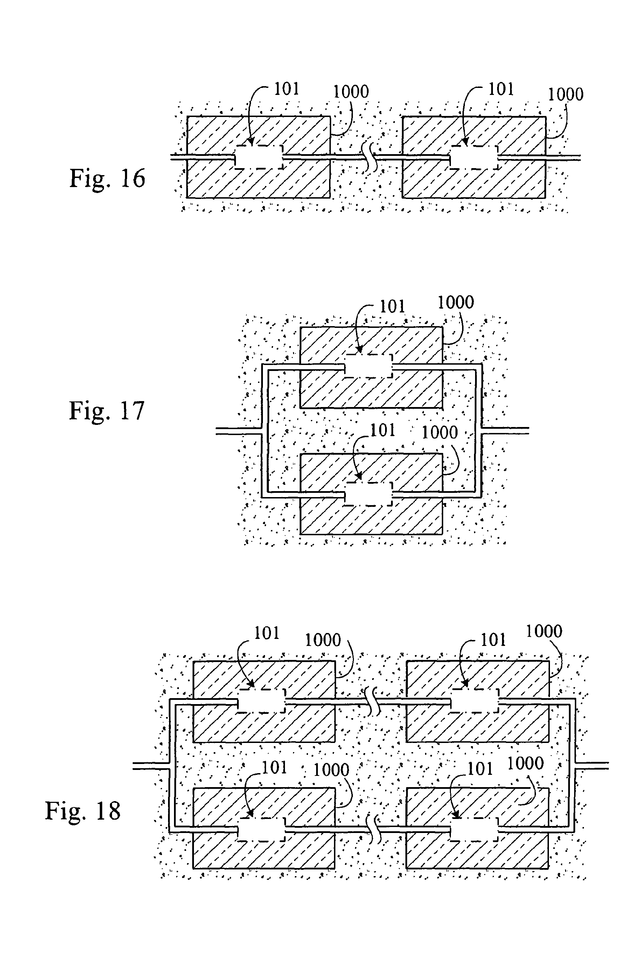

Fig. 16 is a schematic view showing that at least two integral combined bodies of the intermediate thermal storage (1000) and the active temperature equalizer (201) in the embodiment of the present invention as shown in Fig. 11 being series connected by flow ducts are dispersedly installed in the natural thermal matrix (100).
Fig. 17 is a schematic view showing that at least two integral combined bodies of the intermediate thermal storage (1000) and the active temperature equalizer (201) in the embodiment of the present invention as shown in Fig. 11 being parallel connected by flow ducts are dispersedly installed in the natural thermal matrix (100).
Fig. 18 is a schematic view showing that at least three integral combined bodies of the intermediate thermal storage (1000) and the active temperature equalizer (201) in the embodiment of the present invention as shown in Fig. 11 being series and parallel connected by flow ducts are dispersedly installed in the natural thermal matrix (100).
   - A thermal fluid transmission piping (202): The interior of thermal fluid transmission piping (202) appearing in a closed piping circuit is filled with thermal transmission fluid (203) to be driven by the fluid pump (204) to circulate between the active temperature equalizer (201) of the intermediate thermal storage (1000) and the passive temperature equalized body (205) for thermal energy transfer;
   - A thermal transmission fluid (203): It is pumped by the fluid pump (204) to circulate within the thermal fluid transmission piping (202) and is flowed through the active temperature equalizer (201) of the intermediate thermal storage (1000), so that thermal energy of the intermediate thermal storage (1000) is transferred through the thermal transmission fluid (203) to the passive temperature equalized body (205), wherein the thermal transmission fluid (203) normally adopts water, or oil, or other liquids or air, or other liquid or gas of larger thermal storage to constitute the thermal transmission fluid (203);
   - A fluid pump (204): It is belong to the various fluid pumps driven by electric or other mechanical power including constituted by one stage or more than one stage of the fluid pump (204) for pressure increase active pumping the thermal transmission fluid (203) to circulate within the thermal fluid transmission piping (202);
   - A passive temperature equalized body (205): At least one passive temperature equalized body (205) is arranged to receive the thermal energy transferred from the active temperature equalizer (201) installed in the intermediate thermal storage (1000) through the thermal transmission fluid (203) inside the thermal fluid transmission piping (202); wherein one or two or more than two passive temperature equalized bodies (205) can be optionally installed as needed, and the thermal fluid transmission piping (202) of the passive temperature equalized body (205) is in series connection, parallel connection, or series and parallel connection, wherein installation positions of the passive temperature equalized body (205) can be selected to include the following: 1) The passive temperature equalized body (205) is installed in the temperature regulated space constituted by indoor space or semi-closed space or open area for releasing thermal energy to temperature regulated space for cooling or heating, wherein the exterior of the passive temperature equalized body (205) can be a smooth flat surface or can be further optionally installed with fin type structure as needed, or can be further optionally installed with air flow blowing fans; or 2) The passive temperature equalized body (205) is installed inside the temperature regulated space constituted by interior of building structure such as walls, columns, beams, floors or shallow ground layers or roof interiors, etc. to receive the thermal energy transferred by the thermal transmission fluid (203) circulated in the closed circuit for cooling or heating; or 3) The passive temperature equalized body (205) and the heat dissipater of air conditioning unit can be integrally combined for heat conduction to execute cooling or heating for temperature equalization; or 4) The passive temperature equalized body (205) and gaseous or liquid flow heat exchanger can be integrally combined for heat conduction to execute cooling or heating for temperature equalization; or 5) The passive temperature equalized body (205) and gaseous or liquid flow heat reconverter are integrally combined for heat conduction to execute cooling or heating for temperature equalization; or 6) The passive temperature equalized body (205) is installed in the tooling equipment required for operation in setting temperature range such as the structures of machine or production equipment, internal combustion or external combustion engines, transformers or rotational electrical machines, or electricity storage device, etc. or the thermal transmission fluid (203) is introduced into the temperature adjusting piping of above said tooling equipment thereby allowing the passive temperature equalized body (205) to integrally combine with the tooling equipment so as to pass through the thermal transmission fluid (203) to execute cooling or heating for temperature equalization;
   - A filtrating device (206): the filtrating device is constituted by thermal transmission fluid (203) filtrating structures capable of being dismantled for cleaning to avoid piping blockage after long time use and for easy cleaning, wherein it is optionally installed at the random position on the closed circuited thermal fluid transmission piping (202) as needed, such as the suction inlet or discharge outlet or middle position or multiple positions; wherein this device can be optionally installed or not installed as needed;
   - A flow rate adjusting device (207): The flow rate of thermal transmission fluid (203) can be operatively controlled by manual or mechanical power as required, wherein if the system is a closed fluid circulating circuit, the adjustment can be made by series modulation or parallel distributing modulation methods to modulate the flow rate of the flow rate adjusting device (207) and to further adjust the flow rate of the thermal transmission fluid (203) passing through the passive temperature equalized body so as to change the flow rate of the thermal transmission fluid (203) being transported to the temperature regulated space or the passive temperature equalized body (205) in the structured body of temperature regulated space thereby modulating the thermal energy of the passive temperature equalized body (205), and if the passive temperature equalized body (205) itself is equipped with a fluid pump (204), the release thermal energy can be adjusted by adjusting pumping capacity of the fluid pump (204); wherein this device can be optionally installed or not installed as needed;
   - A temperature detecting device (1082): It is installed in the temperature regulated space for detecting temperature or is installed at the air flow inlet or outlet for detecting temperature so as to send out messages; wherein this device can be optionally installed or not installed as needed;
   - An auxiliary adjusting device (209): If the temperature of active temperature equalizer (201) does not reach desired value, an auxiliary adjusting device (209) can be additionally installed in the temperature regulated space as shown in Fig. 19 which is a brief structural schematic view showing that the embodiment as shown in Fig. 11 is additionally installed with an auxiliary adjusting device; wherein thermal energy transferred via the thermal transmission fluid (203) from the intermediate thermal storage (1000) to the passive temperature equalized body (205) is further supplied to the auxiliary adjusting device constituted by conventional heating devices through combustion, electrical heating or solar energy, etc. to increase temperature, or is further supplied to the auxiliary adjusting device constituted by conventional cooling adjusting devices to reduce temperature; wherein this device can be optionally installed or not installed as needed;
   - An operative control unit (208): It is constituted by electromechanical device, electronic circuit device, as well as microprocessor and relevant software and operating interface circuits, wherein signals of the temperature detecting device being installed in the temperature regulated space or temperature adjusting structure, or the temperature detecting device (1082) installed within the natural thermal matrix (100) is operated manually or operatively controlled by electric or mechanical power to operatively control the operation of the fluid pump (204) and the flow rate adjusting device (207); wherein this device can be optionally installed or not installed as needed.

The system constituting methods for the embodiments described in Figs. 11∼19 include the following:
- The intermediate thermal storage (1000) is buried in, or settled to, or hung by or floated on the sea, or lakes, or water pools, or rivers or man-made water basins; the active temperature equalizer (201) is installed inside, or integrally combined with, or neighborly combined with the intermediate thermal storage (1000); the fluid inlet and outlet of the active temperature equalizer (201) is provided with the thermal fluid transmission piping (202) being extended to the main building structure on land or to indoor or outdoor spaces of the building, or the passive temperature equalized body (205) on the earth surface thereby constituting a closed circuit, and it is through thermal transmission fluid (203) being pumped by the fluid pump (204) for closed circuit temperature adjustment on the indoor or outdoor space of the building, or the passive temperature equalized body (205) on the earth surface;
   - The active temperature equalizer (201) is enclosed or integrally combined with, or neighborly combined with the intermediate thermal storage (1000) buried under earth layers; the fluid inlet and outlet ends of the active temperature equalizer (201) are provided with the thermal fluid transmission piping (202) being extended to the main building structure on land or to indoor or outdoor spaces of the building, or the passive temperature equalized body (205) on the earth surface thereby constituting a closed circuit, and it is through thermal transmission fluid (203) being pumped by the fluid pump (204) for closed circuit temperature adjustment on the main building structure on land, the indoor or outdoor space of the building, or the passive temperature equalized body (205) on the earth surface.

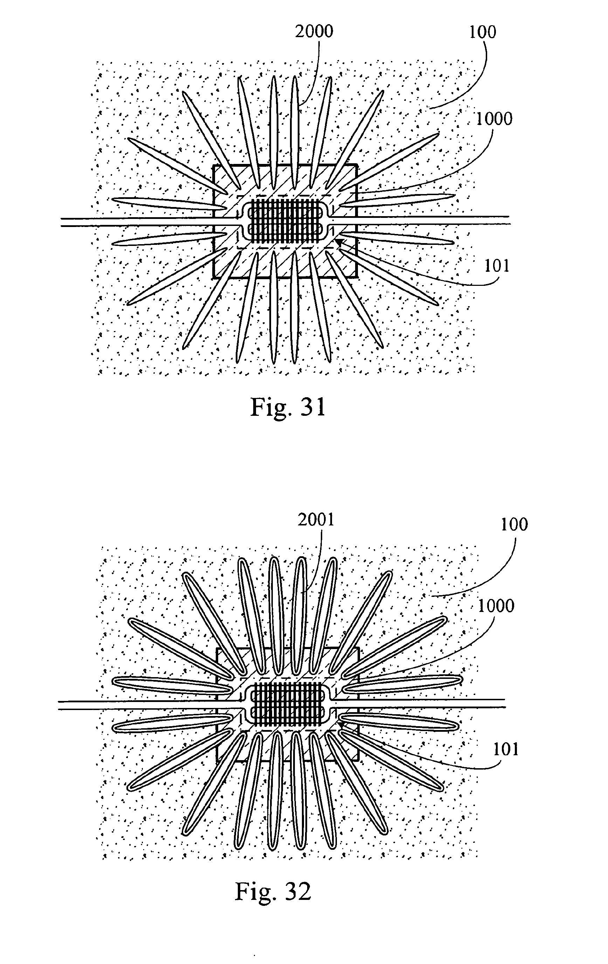

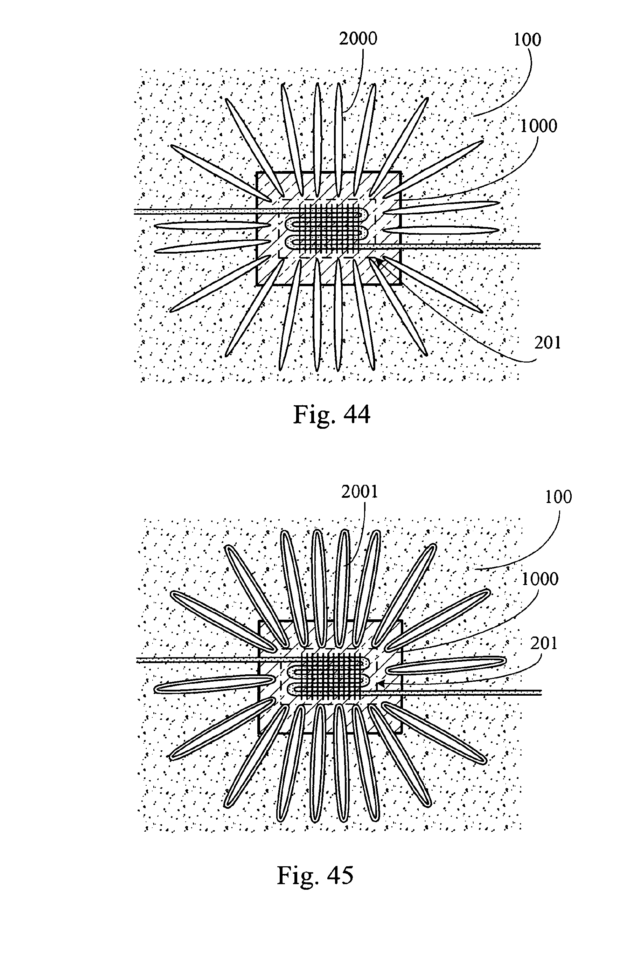

Regarding the temperature equalization air supply system of natural thermal energy with intermediate thermal storage as shown in Figs. 3∼10, wherein the embodiment of the intermediate thermal storage (1000) being installed with the temperature equalizer (101) to be further installed within the natural thermal matrix (100) includes the following:

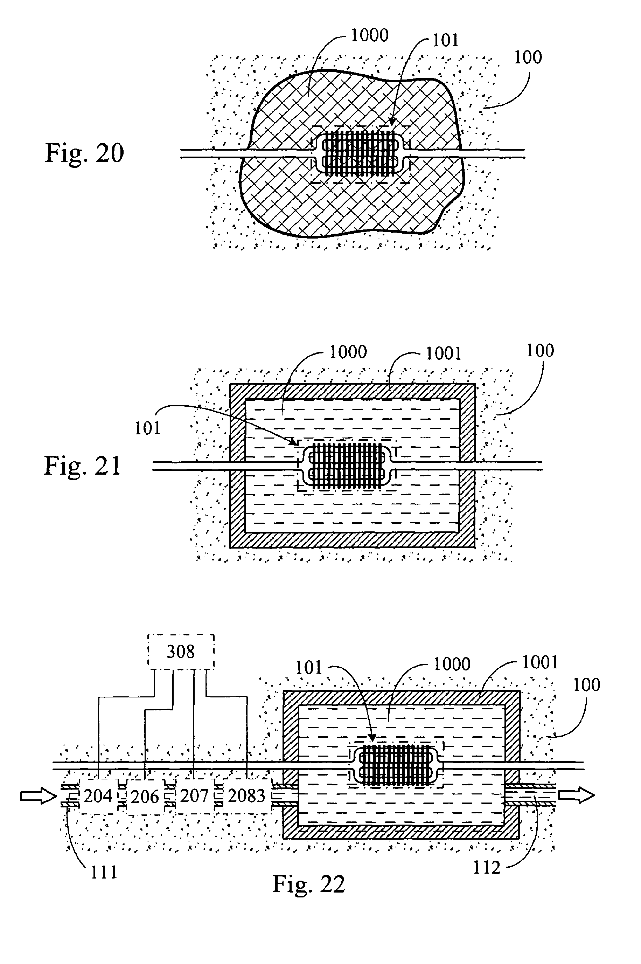

1. Fig. 20 is a schematic view of the embodiment showing that the intermediate thermal storage constituted by solid state or colloidal type material is installed between the natural thermal matrix and the temperature equalizer; wherein it is described in the following:
   The intermediate thermal storage (1000) constituted by solid state or colloidal type material as shown in Fig. 20 having both or either one of the better thermal conductivity coefficient and better unit heat capacity ratio than the ones of the outside surrounding natural thermal matrix (100) of stable temperature is installed between the natural thermal matrix (100) and the temperature equalizer (101); or
2. Fig. 21 is a schematic view of the embodiment showing that the intermediate thermal storage constituted by a closable shell filled with liquid or gaseous state or colloidal type or solid sate material inside is installed between the natural thermal matrix and the temperature equalizer; wherein it is described in the following:
   The intermediate thermal storage (1000) is constituted by a closable shell (1001) filled with liquid or gaseous state, colloidal type or solid state material as shown in Fig. 21, wherein the intermediate thermal storage (1000) constituted by a closable shell (1001) filled with liquid or gaseous state, colloidal type or solid state material having both or either one of the better thermal conductivity coefficient and better unit heat capacity ratio than the ones of the outside surrounding natural thermal matrix (100) of stable temperature is installed between the natural thermal matrix (100) and the temperature equalizer (101); the closable shell (1001) can be a closed structure or can be constituted by a sealing cover structure capable of opening and closing;
   Said closable shell (1001) can be further disposed with at least one fluid inflow passage (111) and at least one fluid outflow passage (112) for fluids flowing in and out, so as the fluids inside the closable shell (1001) are continuously replaced by currents such as from piped water or other water supply system, or from water sources in nature, thus to keep the temperature difference; the fluid inflow passage (111), or the fluid outflow passage (112) of the closable shell (1001) can be disposed as required with one or more than one of the auxiliary device as follows for managing and manipulating in practical applications, including:
      1) A fluid pump (204) is disposed to actively pump fluids, thereby to assistant or replace the flowing kinetics of the natural fluids, thus to enable the flow of fluids;
      2) A Filtrating device (206) is disposed to filtrating fluids, said filtrating device can be a built-in one or further being manipulated by the operative control unit (308);
      3) A flow rate adjusting device (207) is disposed to adjust flow rate;
      4) A flow meter (2083) is disposed, wherein said flow meter (2083) can be disposed in the earth layer, or underneath the earth layer or on the earth surface, thereby to measure the flow rate of the passing fluids;
      5) An operative control unit (308) is disposed, wherein said operative control unit (308) being constituted by electromechanical device, electronic circuit device, as well as microprocessor and relevant software and operating interface circuits, including to be manipulated by manual, mechanical or electric operations is arranged to manipulate the operation of said fluid pump (204), filtrating device (206), flow rate adjusting device (207) as well as flow meter (2083), and to display the flow rate measured by the flow meter (2083).
   Fig. 22 is a schematic view of the embodiment showing that at least one fluid inflow passage and at least one fluid outflow passage is disposed to Fig. 21;
   The closable shell (1001) can be optionally constituted by material of good thermal conductivity coefficient, or constituted by the buildings or made of material of non-particularly selected thermal conductivity coefficient as needed; or
3. Fig. 22 is a schematic view of the embodiment showing that the intermediate thermal storage constituted by an open tank with liquid state, colloidal type or solid state material inside is installed between the natural thermal matrix and the temperature equalizer; wherein it is described in the following:
   The intermediate thermal storage (1000) constituted by an upward open tank type shell body (1002) with liquid state colloidal type or solid state material inside as shown in Fig. 22 having both or either one of the better thermal conductivity coefficient and better unit heat capacity ratio than the ones of the outside surrounding natural thermal matrix (100) of stable temperature is installed between the natural thermal matrix (100) and the temperature equalizer (101);
   Said upward open tank type shell body (1002) can be further disposed with at least one fluid inflow ditch (113) or fluid inflow passage (111) and at least one fluid outflow ditch (114) or fluid outflow passage (112) for fluids flowing in and out, so as the fluids inside the upward open tank type shell body (1002) are continuously replaced by currents such as from piped water or other water supply system, or from water sources in nature, thus to keep the temperature difference; the fluid inflow passage (111), or the fluid outflow passage (112), or the fluid inflow ditch (113), or the fluid outflow ditch (114) of the upward open tank type shell body (1002) can be disposed as required with one or more than one of the auxiliary device as follows for managing and manipulating in practical applications, including:
      1) A fluid pump (204) is disposed to actively pump fluids, thereby to assistant or replace the flowing kinetics of natural fluids, thus to enable the flow of fluids;
      2) A Filtrating device (206) is disposed to filtrating fluids, said filtrating device can be a built-in one or further being manipulated by the operative control unit (308);
      3) A flow rate adjusting device (207) is disposed to adjust flow rate;
      4) A flow meter (2083) is disposed, wherein said flow meter (2083) can be disposed in the earth layer, underneath the earth layer or on the earth surface, thereby to measure the flow rate of the passing fluids;
      5) The operative control unit (308) is disposed, wherein said operative control unit (308) being constituted by electromechanical device, electronic circuit device, as well as microprocessor and relevant software and operating interface circuits, including to be manipulated by manual, mechanical or electric operations is arranged to manipulate the operation of said fluid pump (204), filtrating device (206), flow rate adjusting device (207) as well as flow meter (2083), and to display the flow rate measured by the flow meter (2083).

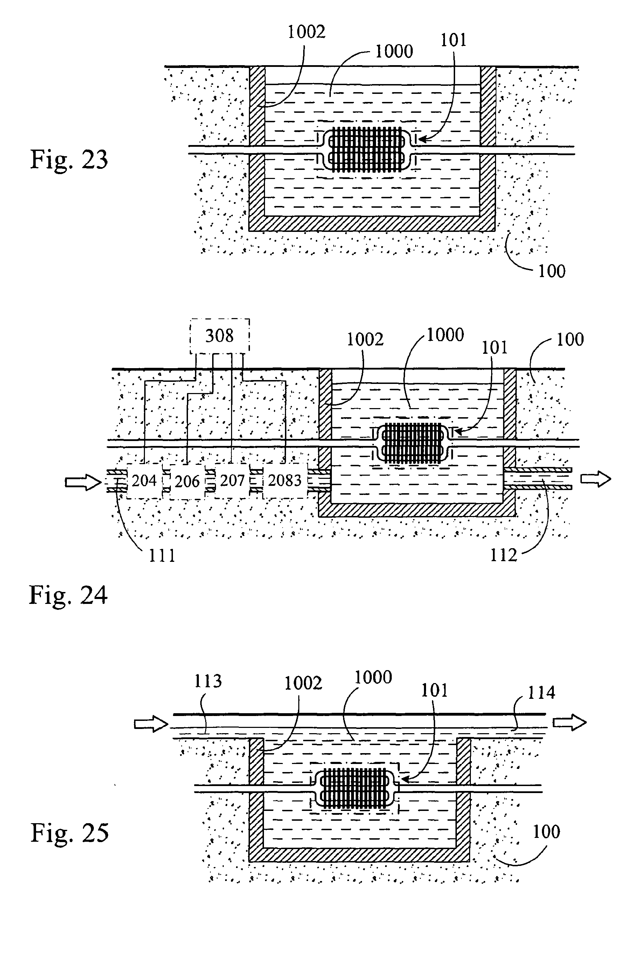

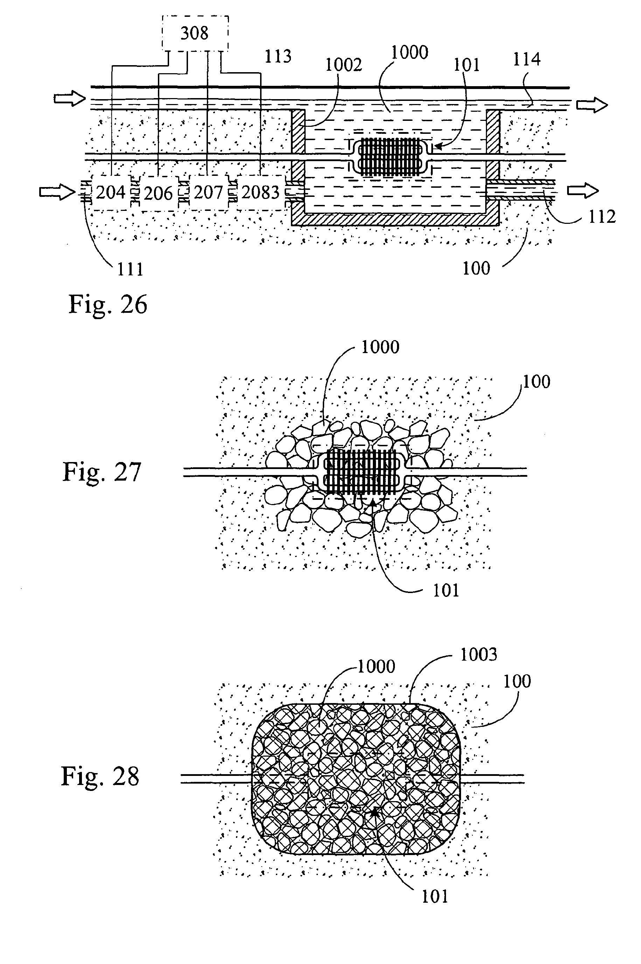

   Fig. 24 is a schematic view of the embodiment showing that at least one fluid inflow passage and at least one fluid outflow passage is disposed to Fig. 23; Fig. 25 is a schematic view of the embodiment showing that at least one fluid inflow ditch and at least one fluid outflow ditch is disposed to Fig. 23; Fig. 26 is a schematic view of the embodiment showing that a fluid inflow passage and a fluid inflow ditch and a fluid outflow passage and a fluid outflow ditch are simultaneously disposed to Fig. 23;
   The upward open tank type shell body (1002) can be optionally constituted by material of good thermal conductivity coefficient, or constituted by the buildings or made of material of non-particularly selected thermal conductivity coefficient as needed; or
4. Fig. 27 is a schematic view showing that the intermediate thermal storage constituted by multiple powders like or multiple blocks like solids is installed between the natural thermal matrix and the temperature equalizer; wherein it is described in the following:
   The intermediate thermal storage (1000) constituted by multiple powders like or multiple blocks like solids as shown in Fig. 27 having both or either one of the better thermal conductivity coefficient and better unit heat capacity ratio than the ones of the outside surrounding natural thermal matrix (100) of stable temperature is installed between the natural thermal matrix (100) and the temperature equalizer (101); or
5. Fig. 28 is a schematic view of the embodiment showing that the intermediate thermal storage constituted by multiple powders like or multiple blocks like solids being enclosed by a mesh type structure is installed between the natural thermal matrix and the temperature equalizer; wherein it is described in the following:
   The intermediate thermal storage (1000) constituted by multiple powders like or multiple blocks like solids being enclosed by a mesh type structure (1003) as shown in Fig. 28 having both or either one of the better thermal conductivity coefficient and better unit heat capacity ratio than the ones of the outside surrounding natural thermal matrix (100) of stable temperature is installed between the natural thermal matrix (100) and the temperature equalizer (101); wherein the mesh type structure can be optionally constituted by material of good thermal conductivity coefficient, or constituted by the buildings or made of material of non-particularly selected thermal conductivity coefficient as needed; or

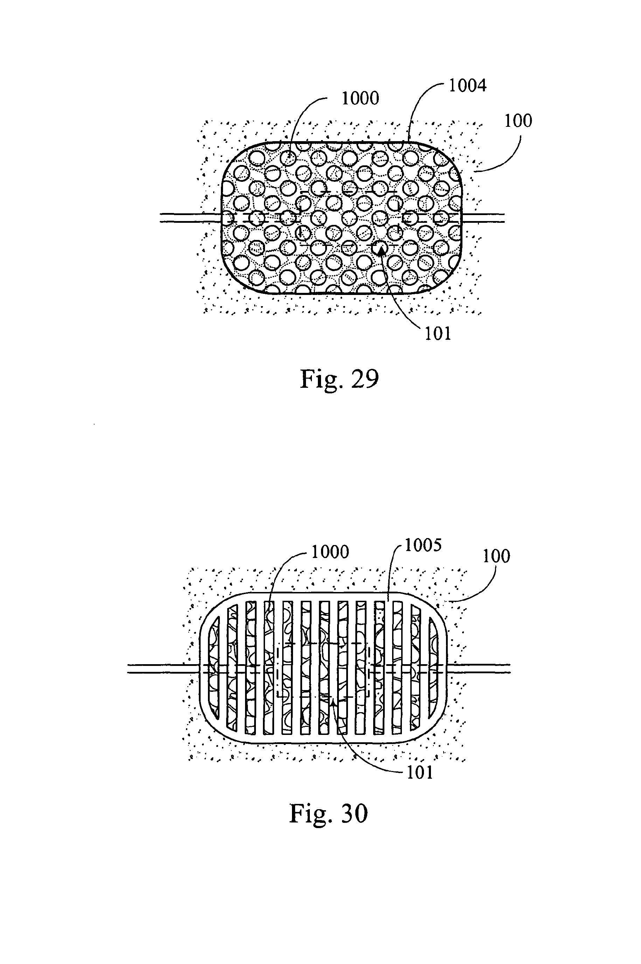

6. Fig. 29 is a schematic view of the embodiment showing that the intermediate thermal storage constituted by multiple powders like or multiple blocks like solids being enclosed by a porous type structure is installed between the natural thermal matrix and the temperature equalizer; wherein it is described in the following:
   The intermediate thermal storage (1000) constituted by multiple powders like or multiple blocks like solids being enclosed by a porous type structure (1004) as shown in Fig. 29 having both or either one of the better thermal conductivity coefficient and better unit heat capacity ratio than the ones of the outside surrounding natural thermal matrix (100) of stable temperature is installed between the natural thermal matrix (100) and the temperature equalizer (101); wherein the porous type structure can be optionally constituted by material of good thermal conductivity coefficient, or constituted by the buildings or made of material of non-particularly selected thermal conductivity coefficient as needed; or
7. Fig. 30 is a schematic view of the embodiment showing that the intermediate thermal storage constituted by multiple powders like or multiple blocks like solids being enclosed by a screen type structure is installed between the natural thermal matrix and the temperature equalizer; wherein it is described in the following:
   The intermediate thermal storage (1000) constituted by multiple powders like or multiple blocks like solids being enclosed by a screen type structure (1005) as shown in Fig. 30 having both or either one of the better thermal conductivity coefficient and better unit heat capacity ratio than the ones of the outside surrounding natural thermal matrix (100) of stable temperature is installed between the natural thermal matrix (100) and the temperature equalizer (101); wherein the screen type structure can be optionally constituted by material of good thermal conductivity coefficient, or constituted by the buildings or made of material of non-particularly selected thermal conductivity coefficient as needed. The aforesaid temperature equalization air supply system of natural thermal energy with intermediate thermal storage as shown in Figs. 3∼10, wherein as shown in Fig. 31 which is a schematic view of the embodiment showing that an auxiliary radial type heat conduction device (2000) can be further installed in plane direction (2D) or 3D direction (3D) or perpendicular direction between the intermediate thermal storage (1000) for installing the temperature equalizer (101) and the natural thermal matrix (100);
   Fig. 31 is described in the following:
      In considering the manufacturing and designing costs for promoting heat conduction effect between the intermediate thermal storage (1000) and the natural thermal matrix (100), an auxiliary radial type heat conduction device (2000) can be installed in plane direction (2D) or 3D direction (3D) or perpendicular direction between the intermediate thermal storage (1000) and the natural thermal matrix (100) to promote thermal energy transfer effect, wherein the methods of installation include:
         - An auxiliary radial type heat conduction device (2000): It is made of material with good thermal conductivity coefficient having at least one column, flake or fin type heat conducting structures outwardly extended in plane direction (2D) or 3D direction (3D) or perpendicular direction, wherein the auxiliary radial type heat conduction device (2000) can be a solid structure or a hollow structure containing internal heat conducting fillers or heat pipe structures to be installed between the intermediate thermal storage (1000) and the natural thermal matrix (100);
   Said auxiliary radial type heat conduction device (2000) can be further replaced by a hollow structure containing internal heat conducting fillers or heat pipe structures, wherein as shown in Fig. 32 which is a schematic view of the embodiment showing that the present invention of a hollow structure containing internal heat conducting fillers or heat pipe structures is installed between the intermediate thermal storage (1000) for installing the temperature equalizer (101) and the natural thermal matrix (100).
   The installation methods for the auxiliary radial type heat conduction device (2001) of a hollow structure containing internal heat conducting fillers or heat pipe structures shown in the embodiment of Fig. 32 include the following:
      - If the intermediate thermal storage (1000) is directly installed between the natural thermal matrix (100) and the temperature equalizer (101), then the auxiliary radial type heat conduction device (2001) of a hollow structure containing internal heat conducting fillers or heat pipe structures is extendedly installed between the intermediate thermal storage (1000) and the natural thermal matrix (100) in plane direction (2D) or 3D direction (3D) or perpendicular direction, as well as extendedly to the inside of the intermediate thermal storage (1000) and the natural thermal matrix (100) in plane direction (2D) or 3D direction (3D) or perpendicular direction, to promote the thermal energy transfer effect;
      - If the intermediate thermal storage (1000) is installed with a container type shell structure of good thermal conductivity coefficient, or a mesh, screen or porous type separation structure of good thermal conductivity coefficient, then an auxiliary radial type heat conduction device (2001) of a hollow structure containing internal heat conducting fillers or heat pipe structures can be combined with a container type shell structure of good thermal conductivity coefficient or combined with a mesh, screen or porous type separation structure of good thermal conductivity coefficient, wherein the auxiliary radial type heat conduction device (2001) of a hollow structure containing internal heat conducting fillers or heat pipe structures is installed in plane direction (2D) or 3D direction (3D) or perpendicular direction facing to both or either of the intermediate thermal storage (1000) and the natural thermal matrix (100) to promote the heat transfer effect;
   The temperature equalization air supply system of natural thermal energy with intermediate thermal storage as shown in the embodiments of Figs. 11∼19, wherein the embodiments of the intermediate thermal storage (1000) installed with an active temperature equalizer (201) being further installed within the natural thermal matrix (100) are the following:

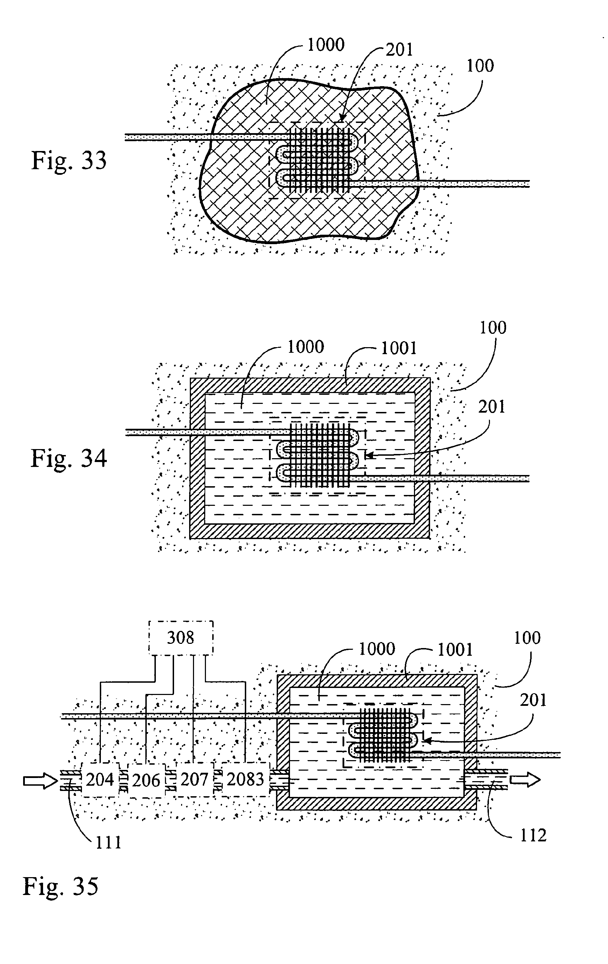

8. Fig. 33 is a schematic view of the embodiment showing that the intermediate thermal storage constituted by solid state or colloidal type material is installed between the natural thermal matrix and the active temperature equalizer, wherein it is described in the following:
   As shown in Fig. 33, the intermediate thermal storage (1000) constituted by solid state or colloidal type material having both or either of the better thermal conductivity coefficient and better unit heat capacity ratio than the ones of the outside surrounding natural thermal matrix (100) of stable temperature is installed between the natural thermal matrix (100) and the active temperature equalizer (201); or
9. Fig. 34 is a schematic view of the embodiment showing that the intermediate thermal storage constituted by a closable shell filled with liquid or gaseous state or colloidal type or solid state material is installed between the natural thermal matrix and the active temperature equalizer; wherein it is described in the following:
   As shown in Fig. 34, the intermediate thermal storage (1000) constituted by a closable shell (1001) filled with liquid or gaseous state, colloidal type or solid state material having both or either one of the better thermal conductivity coefficient and better unit heat capacity ratio than the ones of the outside surrounding natural thermal matrix (100) of stable temperature is installed between the natural thermal matrix (100) and the active temperature equalizer (201); wherein the closable shell (1001) can be a closed structure or can be constituted by a sealing cover structure capable of opening and closing;
   Said closable shell (1001) can be further disposed with at least one fluid inflow passage (111) and at least one fluid outflow passage (112) for fluids flowing in and out, so as the fluids inside the closable shell (1001) are continuously replaced by currents such as from piped water or other water supply system, or from water sources in nature, thus to keep the temperature difference; The fluid inflow passage (111), or the fluid outflow passage (112) of the closable shell (1001) can be disposed as required with one or more than one of the auxiliary device as follows for managing and manipulating in practical applications, including:
      1) A fluid pump (204) is disposed to actively pump fluids, thereby to assistant or replace the flowing kinetics of natural fluids, thus to enable the flow of fluids;
      2) A Filtrating device (206) is disposed to filtrating fluids, said filtrating device can be a built-in one or further being manipulated by the operative control unit (308);
      3) A flow rate adjusting device (207) is disposed to adjust flow rate;
      4) A flow meter (2083) is disposed, wherein said flow meter (2083) can be disposed in the earth layer, underneath the earth layer or on the earth surface, thereby to measure the flow rate of the passing fluids;
      5) The operative control unit (308) is disposed, wherein said operative control unit (308) being constituted by electromechanical device, electronic circuit device, as well as microprocessor and relevant software and operating interface circuits, including to be manipulated by manual, mechanical or electric operations is arranged to manipulate the operation of said fluid pump (204), filtrating device (206), flow rate adjusting device (207) as well as flow meter (2083), and to display the flow rate measured by the flow meter (2083).
   Fig. 35 is a schematic view of the embodiment showing that at least one fluid inflow passage and at least one fluid outflow passage is disposed to Fig. 34;
   The closable shell (1001) can be optionally constituted by material of good thermal conductivity coefficient, or constituted by the buildings or made of material of non-particularly selected thermal conductivity coefficient as needed; or

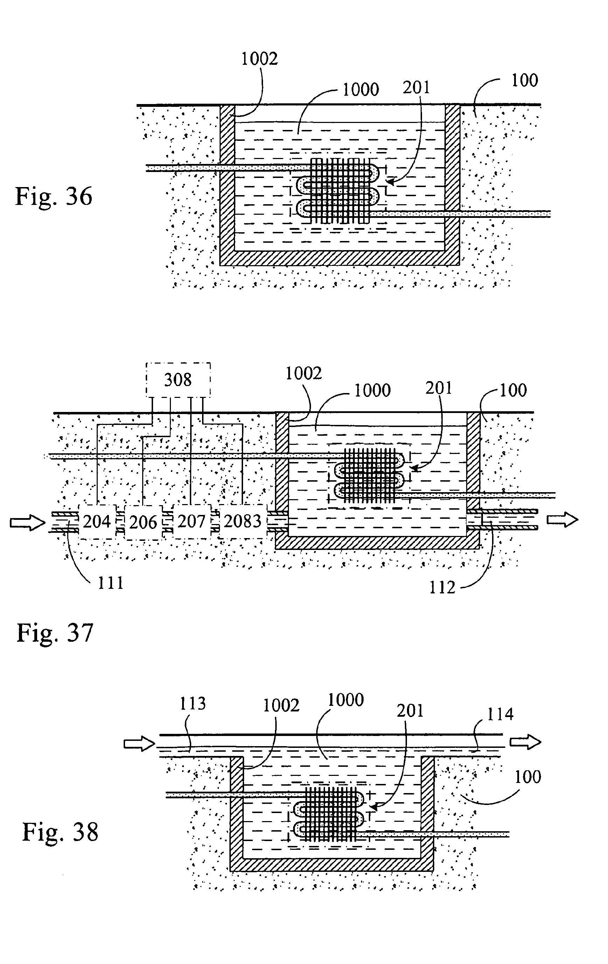

10. Fig. 36 is a schematic view of the embodiment showing that the intermediate thermal storage constituted by an open tank with liquid state, colloidal type or solid state material inside is installed between the natural thermal matrix and the active temperature equalizer; wherein it is described in the following:
   As shown in Fig. 36, the intermediate thermal storage (1000) constituted by an upward open tank type shell body (1002) with liquid state or colloidal type or solid state material inside having both or either one of the better thermal conductivity coefficient and better unit heat capacity ratio than the ones of the outside surrounding natural thermal matrix (100) of stable temperature is installed between the natural thermal matrix (100) and the active temperature equalizer (201);
   Said upward open tank type shell body (1002) can be further disposed with at least one fluid inflow ditch (113) or fluid inflow passage (111) and at least one fluid outflow ditch (114) or fluid outflow passage (112) for fluids flowing in and out, so as the fluids inside the upward open tank type shell body (1002) are continuously replaced by currents such as from piped water or other water supply system, or from water sources in nature, thus to keep the temperature difference; The fluid inflow passage (111), or the fluid outflow passage (112), or the fluid inflow ditch (113), or the fluid outflow ditch (114) of the upward open thank type shell body (1002) can be disposed as required with one or more than one of the auxiliary device as follows for managing and manipulating in practical applications, including:
      1) A fluid pump (204) is disposed to actively pump fluids, thereby to assistant or replace the flowing kinetics of natural fluids, thus to enable the flow of fluids;
      2) A Filtrating device (206) is disposed to filtrating fluids, said filtrating device can be a built-in one or further being manipulated by the operative control unit (308);
      3) A flow rate adjusting device (207) is disposed to adjust flow rate;
      4) A flow meter (2083) is disposed, wherein the flow meter (2083) can be disposed in the earth layer, underneath the earth layer or on the earth surface, thereby to measure the flow rate of the passing fluids;
      5) The operative control unit (308) is disposed, wherein the operative control unit (308) being constituted by electromechanical device, electronic circuit device, as well as microprocessor and relevant software and operating interface circuits, including to be manipulated by manual, mechanical or electric operations is arranged to manipulate the operation of said fluid pump (204), filtrating device (206), flow rate adjusting device (207) as well as flow meter (2083), and to display the flow rate measured by the flow meter (2083).

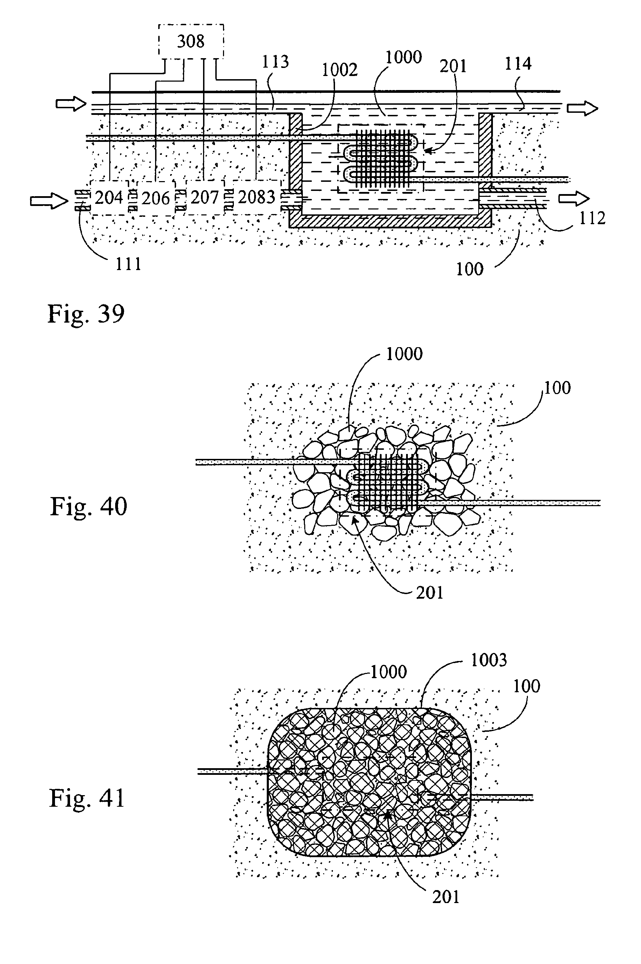

   Fig. 37 is a schematic view of the embodiment showing that at least one fluid inflow passage and at least one fluid outflow passage is disposed to Fig. 36; Fig. 38 is a schematic view of the embodiment showing that at least one fluid inflow ditch and at least one fluid outflow ditch is disposed to Fig. 36; Fig. 39 is a schematic view of the embodiment showing that a fluid inflow passage and a fluid inflow ditch and a fluid outflow passage and a fluid outflow ditch are simultaneously disposed to Fig. 36;
   The upward open tank type shell body (1002) can be optionally constituted by material of good thermal conductivity coefficient, or constituted by the buildings or made of material of non-particularly selected thermal conductivity coefficient as needed; or
11. Fig. 40 is a schematic view of the embodiment showing that the intermediate thermal storage constituted by multiple powders like or multiple blocks like solids is installed between the natural thermal matrix and the active temperature equalizer; wherein it is described in the following:
   As shown in Fig. 40, the intermediate thermal storage (1000) constituted by multiple powders like or multiple blocks like solids having both or either one of the better thermal conductivity coefficient and better unit heat capacity ratio than the ones of the outside surrounding natural thermal matrix (100) of stable temperature is installed between the natural thermal matrix (100) and the active temperature equalizer (201); or
12. Fig. 41 is a schematic view of the embodiment showing that the intermediate thermal storage constituted by multiple powders like or multiple blocks like solids being enclosed by a mesh type structure is installed between the natural thermal matrix and the active temperature equalizer; wherein it is described in the following:
   As shown in Fig. 41, the intermediate thermal storage (1000) constituted by multiple powders like or multiple blocks like solids being enclosed by a mesh type structure (1003) having both or either one of the better thermal conductivity coefficient and better unit heat capacity ratio than the ones of the outside surrounding natural thermal matrix (100) of stable temperature is installed between the natural thermal matrix (100) and the active temperature equalizer (201); wherein the mesh type structure can be optionally constituted by material of good thermal conductivity coefficient, or constituted by the buildings or made of material of non-particularly selected thermal conductivity coefficient as needed; or

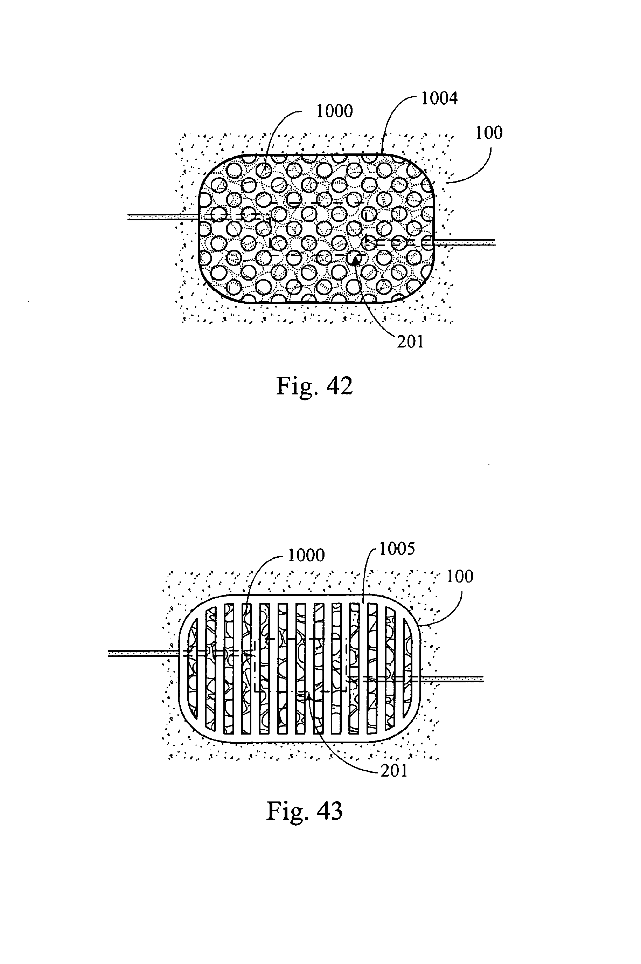

13. Fig. 42 is a schematic view of the embodiment showing that the intermediate thermal storage constituted by multiple powders like or multiple blocks like solids being enclosed by a porous type structure is installed between the natural thermal matrix and the active temperature equalizer; wherein it is described in the following:
   As shown in Fig. 42, the intermediate thermal storage (1000) constituted by multiple powders like or multiple blocks like solids being enclosed by a porous type structure (1004) having both or either one of the better thermal conductivity coefficient and better unit heat capacity ratio than the ones of the outside surrounding natural thermal matrix (100) of stable temperature is installed between the natural thermal matrix (100) and the active temperature equalizer (201); wherein the porous type structure can be optionally constituted by material of good thermal conductivity coefficient, or constituted by the buildings or made of material of non-particularly selected thermal conductivity coefficient as needed; or
14. Fig. 43 is a schematic view of the embodiment showing that the intermediate thermal storage constituted by multiple powders like or multiple blocks like solids being enclosed by a screen type structure is installed between the natural thermal matrix and the active temperature equalizer; wherein it is described in the following:
   As shown in Fig. 43, the intermediate thermal storage (1000) constituted by multiple powders like or multiple blocks like solids being enclosed by a screen type structure (1005) having both or either one of the better thermal conductivity coefficient and better unit heat capacity ratio than the ones of the outside surrounding natural thermal matrix (100) of stable temperature is installed between the natural thermal matrix (100) and the active temperature equalizer (201); wherein the screen type structure can be optionally constituted by material of good thermal conductivity coefficient, or constituted by the buildings or made of material of non-particularly selected thermal conductivity coefficient as needed; or
   The aforesaid temperature equalization air supply system of natural thermal energy with intermediate thermal storage as shown in the embodiments of Figs. 11∼19, wherein at where between the intermediate thermal storage (1000) and the natural thermal matrix (100) can be further as shown in Fig. 44 which is a schematic view of the embodiment showing that the auxiliary radial type heat conduction device (2000) is installed in plane direction (2D) or 3D direction (3D) or perpendicular direction between the intermediate thermal storage (1000) for installing the active temperature equalizer (201) and the natural thermal matrix (100);
   Fig. 44 is described in the following:
      In considering the manufacturing and designing costs for promoting heat conduction effect between the intermediate thermal storage (1000) and the natural thermal matrix (100), an auxiliary radial type heat conduction device (2000) can be installed in plane direction (2D) or 3D direction (3D) or perpendicular direction between the intermediate thermal storage (1000) and the natural thermal matrix (100) to promote thermal energy transfer effect, wherein the methods of installation include:
         - An auxiliary radial type heat conduction device (2000): It is made of material with good thermal conductivity coefficient having at least one column, flake or fin type heat conducting structures outwardly extended in planetary direction (2D) or 3D direction (3D) or perpendicular direction, wherein the auxiliary radial type heat conduction device (2000) can be a solid structure or a hollow structure containing internal heat conducting fillers or heat pipe structures to be installed between the intermediate thermal storage (1000) and the natural thermal matrix (100);
      Said auxiliary radial type heat conduction device (2000) can be further replaced by a hollow structure containing internal heat conducting fillers or heat pipe structures, wherein as shown in Fig. 45 which is a schematic view of the embodiment showing that the present invention of a hollow structure containing internal heat conducting fillers or heat pipe structures is installed between the intermediate thermal storage (1000) for installing the active temperature equalizer (201) and the natural thermal matrix (100).
      The installation methods for the auxiliary radial type heat conduction device (2001) of a hollow structure containing internal heat conducting fillers or heat pipe structures shown in the embodiment of Fig. 45 include the following:
         - If the intermediate thermal storage (1000) is directly installed between the natural thermal matrix (100) and the active temperature equalizer (201), then the auxiliary radial type heat conduction device (2001) of a hollow structure containing internal heat conducting fillers or heat pipe structures is extendedly installed between the intermediate thermal storage (1000) and the natural thermal matrix (100) in plane direction (2D) or 3D direction (3D) or perpendicular direction, as well as extendedly to the inside of the intermediate thermal storage (1000) and the natural thermal matrix (100) in plane direction (2D) or 3D direction (3D) or perpendicular direction, to promote the thermal energy transfer effect;
         - If the intermediate thermal storage (1000) is installed with a container type shell structure of good thermal conductivity coefficient, or a mesh, screen or porous type separation structure of good thermal conductivity coefficient, then an auxiliary radial type heat conduction device (2001) of a hollow structure containing internal heat conducting fillers or heat pipe structures can be combined with a container type shell structure of good thermal conductivity coefficient or combined with a mesh, screen or porous type separation structure of good thermal conductivity coefficient, wherein the auxiliary radial type heat conduction device (2001) of a hollow structure containing internal heat conducting fillers or heat pipe structures (100) is installed in plane direction (2D) or 3D direction (3D) or perpendicular direction facing to both or either of the intermediate thermal storage (1000) and natural thermal matrix to promote the heat transfer effect.
      The various constitutions and installing methods for the intermediate thermal storage as disclosed in the embodiments of above Figs. 3∼45 are examples for description purposes only and are not intended to limit applications of the present invention, any conformations to the disclosures of the present invention regarding the innovative intermediate thermal storage (1000) and the temperature equalizer being respectively provided with a first flow duct at the two ends thereof, as well as the various constitutions and installing methods for the intermediate thermal storage (1000) having both or either one of the better thermal conductivity coefficient and better unit heat capacity ratio than the ones of the outside surrounding natural thermal matrix (100) of stable temperature shall be belong to the scope of the present invention.
      Through above described system, only the fixed equipment cost of installation and energy for succeeding pumping power are needed to obtain the temperature adjustment function on the particular space, so that a huge amount of energy can be saved.
      The intermediate thermal storage (1000) and the temperature equalizer (101) of the temperature equalization air supply system of natural thermal energy with intermediate thermal storage can be integrally combined, assembled or neighborly installed, or filled in the surroundings of one or several temperature equalizers (101) in series connection, parallel connection or series and parallel connection thereby forming a integral combined device; wherein the temperature equalizer (101) is constituted by heat conductors with internal single flow circuit or multiple flow circuits in parallel connections, and one or more than one temperature equalizers (101) in series connection, parallel connection or series and parallel connection can be installed inside, or integrally combined with, or neighborly combined with the intermediate thermal storage (1000) for installation within the natural thermal matrix (100), wherein
         - An temperature equalizer (101): It is made of material with good thermal conductivity coefficient, wherein the inside and outside heat absorbing surface and heat release surface appear in smooth flat surfaces or in particular intercrossed shapes, or in particular bended curvilinear structures; or the temperature equalizer (101) can be made of material with good thermal conductivity coefficient and constituted by linear or bended curve shaped flow ducting structures; or the temperature equalizer (101) can be optionally made with outwardly extended fin or column shaped heat conducting structures at the exterior thereof as needed, or is made with inwardly extended fin or column shaped heat conducting structures in the interior thereof as needed, thereby promoting the temperature absorption and release effects, wherein the temperature equalizer is made with at least one inlet and at least one outlet for respectively connecting the first flow duct (102) and the second flow duct (103), etc.;
         - At least one intermediate thermal storage (1000) being constituted by solid, colloidal, liquid or gaseous state thermal storage material is integrally combined, assembled or neighborly installed with the temperature equalizer (101), or filled in the surroundings of one or several temperature equalizers (101) in series connection, parallel connection or series and parallel connection, wherein the thermal conductivity coefficient and the unit heat capacity ratio of the material of the intermediate thermal storage (1000) are better than the ones of the natural thermal matrix (100) being constituted by solid or liquid state thermal storages such as earth layers, earth surfaces, pools, lakes, rivers, deserts, ice bergs, etc.;
         - The intermediate thermal storage (1000) can be directly installed with the temperature equalizer (101) or it can be matchingly further installed with a container type shell structure of good thermal conductivity coefficient at the peripheral outside thereof according to selected material for intermediate thermal storage (1000), or according to structural or environmental requirements; or the mesh, screen or porous type separation structure constituted by material of good thermal conductivity coefficient can be installed to limit or separate the related positions within the space between the intermediate thermal storage (1000) and the natural thermal matrix (100);
         - The heat conducting surfaces between the intermediate thermal storage (1000), the natural thermal matrix (100), and the temperature equalizer appear in smooth flat surfaces or in particular intercrossed shapes, or in particular outwardly extended fin or column type structures in order to promote the heat conductivity effect, wherein the intermediate thermal storage having both or either one of the better thermal conductivity coefficient and better unit heat capacity ratio than the ones of the outside surrounding natural thermal matrix (100) of stable temperature, larger heat capacity of thermal energy can be stored by the intermediate thermal storage (1000) of higher unit heat capacity ratio to transfer maximum thermal energy to the temperature equalizer (101) under the conditions of same unit time and same temperature difference.
      The intermediate thermal storage (1000) and the active temperature equalizer (201) of the temperature equalization air supply system of natural thermal energy with intermediate thermal storage can be integrally combined, assembled or neighborly installed, or can be filled in the surroundings of one or several active temperature equalizers (201) in series connection, parallel connection or series and parallel connection at the peripheral outside thereby constituting the integral combined body, and the active temperature equalizer (201) is constituted by heat conductors with internal single flow circuit or multiple flow circuits in parallel connections, and one or more than one active temperature equalizer (201) in series connection, parallel connection or series and parallel connection can be installed inside, or integrally combined with, or neighborly combined with the intermediate thermal storage (1000) for installation within the natural thermal matrix (100), wherein;
         - The active temperature equalizer (201) can be made of material with good thermal conductivity coefficient , wherein its inside and outside heat absorbing surface and heat release surfaces appear in smooth flat surfaces or in particular intercrossed shapes, or in particular bended curvilinear structures; or it can be made of material with good thermal conductivity coefficient and constituted by linear or bended curve shaped flow piping structures, and the active temperature equalizer (201) can be optionally made with outwardly extended fin or column shaped heat conducting structures at the exterior thereof, or is made with inwardly extended fin or column shaped heat conducting structures in the interior thereof thereby promoting the temperature absorption and release effects, wherein the active temperature equalizer (201) is made with at least one inlet and at least one outlet for respectively connecting with the first flow duct (102) and second flow duct (103);
         - At least one intermediate thermal storage (1000) being constituted by solid, colloidal, liquid or gaseous state thermal storage material is integrally combined, assembled or neighborly installed with the active temperature equalizer (201), or filled in the surroundings of one or several active temperature equalizers (201) in series connection, parallel connection or series and parallel connection, wherein thermal conductivity coefficient and unit heat capacity ratio of the material of intermediate thermal storage (1000) are better than the ones of the natural thermal matrix (100) being constituted by solid or liquid state thermal storages such as earth layers, earth surfaces, pools, lakes, rivers, deserts, ice bergs, etc.;
         - The intermediate thermal storage (1000) can be directly installed with the active temperature equalizer (201) or it can be matchingly further installed with a container type shell structure of good thermal conductivity coefficient at the peripheral outside thereof according to selected material for intermediate thermal storage (1000), or according to structural or environmental requirements; or the mesh, screen or porous type separation structure constituted by material of good thermal conductivity coefficient can be installed to limit or separate the related positions within the space between the intermediate thermal storage (1000) and the natural thermal matrix (100);
         - The heat conducting surfaces between the intermediate thermal storage (1000), the natural thermal matrix (100), and the temperature equalizer appear in smooth flat surfaces or in particular intercrossed shapes, or in particular outwardly extended fin or column type structures in order to promote the heat conductivity effect, wherein the intermediate thermal storage having both or either one of the better thermal conductivity coefficient and better unit heat capacity ratio than the ones of the outside surrounding natural thermal matrix (100) of stable temperature, larger heat capacity of thermal energy can be stored by the intermediate thermal storage (1000) of higher unit heat capacity ratio to transfer maximum thermal energy to the active temperature equalizer (201) under the conditions of same unit time and same temperature difference.
      Regarding this temperature equalization air supply system of natural thermal energy with intermediate thermal storage, said gaseous material adding device (1084) not only can be used in the applications for temperature equalization air supply system of natural thermal energy of intermediate thermal storage, but can also be used in the applications for conventional temperature equalization air supply system of natural thermal energy without intermediate thermal storage, or used as the air supply system for indoor space air supplies such as general breeding warm rooms or warehouses, so as to send in gaseous matters beneficial to human bodies, animals or plants, or to send in micro-powdered matters or liquid mists carried by air flow, or to send in gaseous matters, micro-powdered matters or liquid mists beneficial to conservation of articles, or to send in smell detectable gaseous matters, micro-powdered matters, or liquid mists.
      If the natural thermal matrix (100) or the intermediate thermal storage (1000) in the temperature equalization air supply system of natural thermal energy with intermediate thermal storage are constituted by liquid or gaseous state material, then a fluid mixing pump (214) can be further installed to enhance the thermal energy transfer effect, wherein gas or liquid from the natural thermal matrix (100) is pumped to pass through the intermediate thermal storage (1000) thereby enhancing the thermal energy transfer effect between the natural thermal matrix (100) and the intermediate thermal storage (1000); or the gaseous or liquid material of the intermediate thermal storage (1000) is pumped by the fluid mixing pump (214) to pass through the temperature equalizer (101) or to pass through the active temperature equalizer (201) thereby enhancing the thermal energy transfer effect of the intermediate thermal storage (1000) on the temperature equalizer (101) or on the active temperature equalizer (201);

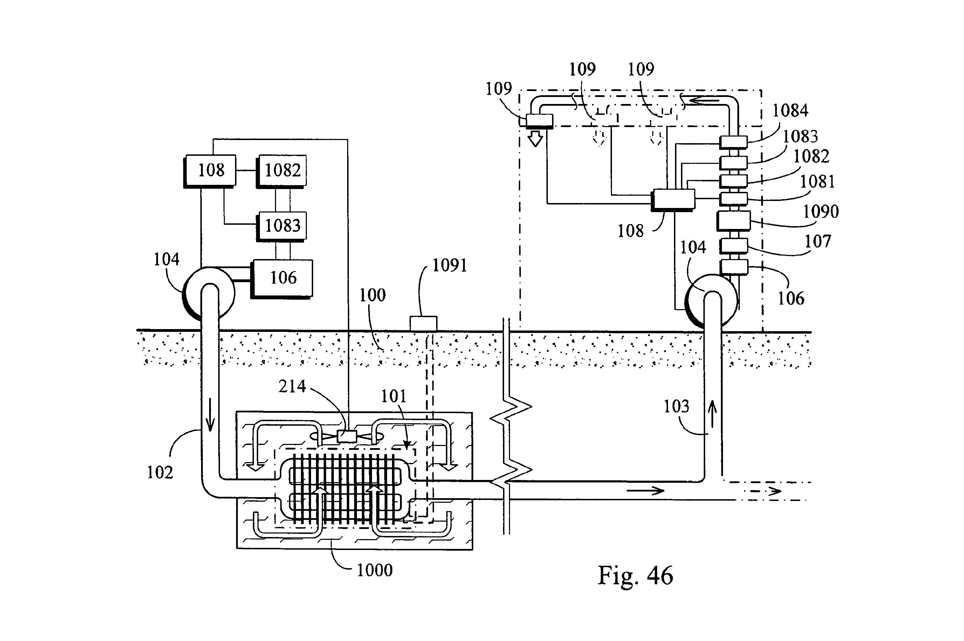

      Fig. 46 is a schematic view of the embodiment by taking Fig. 3 of the present invention as the example showing that the intermediate thermal storage (1000) is installed within the natural thermal matrix constituted by liquid or gaseous state material being installed with a fluid mixing pump (214) thereby allowing liquid or gaseous state material to be pumped by the fluid mixing pump (214) to produce temperature equalization effect on the temperature equalizer (101).

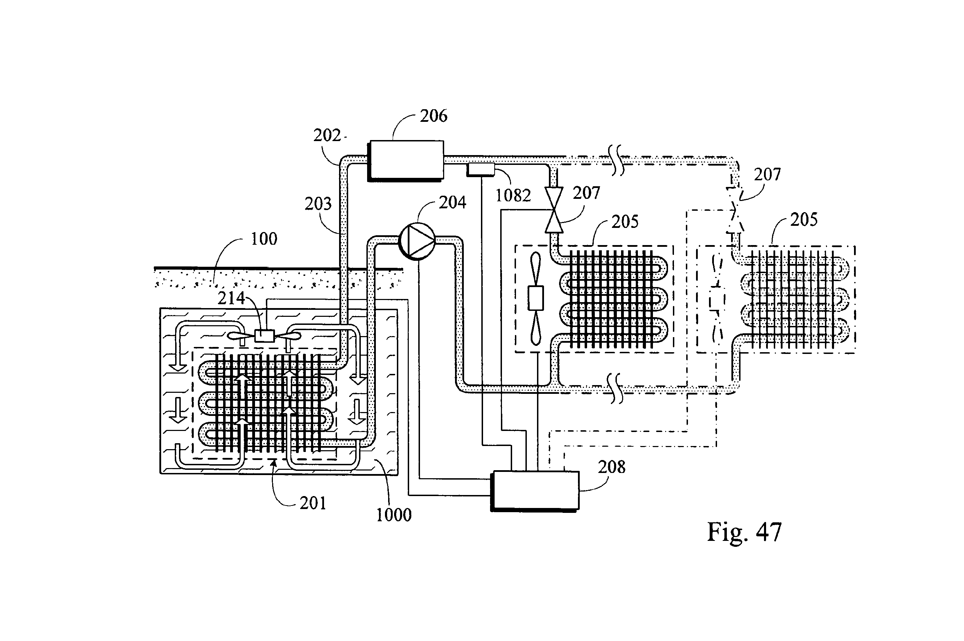

      Fig. 47 is a schematic view of the embodiment by taking Fig. 11 of the present invention as the example showing that the intermediate thermal storage (1000) is installed within the natural thermal matrix constituted by liquid or gaseous state material being installed with a fluid mixing pump (214) thereby allowing liquid or gaseous state material to be pumped by the fluid mixing pump (214) to produce temperature equalization effect on the active temperature equalizer (201).
      Naturally, the method for the natural thermal matrix (100) constituted by gaseous or liquid state material being pumped by the fluid mixing pump (214) can also be applied to the conventional system that the temperature equalizer (101) or the active temperature equalizer (201) being directly installed within the natural thermal matrix (100), wherein when the natural thermal matrix (100) is constituted by gaseous or liquid state material, the gaseous or liquid material flow of the natural thermal matrix (100) is pumped by the fluid mixing pump (214) to circulate through the temperature equalizer (101), or through the active temperature equalizer (201) so as to enhance the thermal energy transfer effect by the natural thermal matrix (100) on the temperature equalizer (101), or on the active temperature equalizer (201), etc..

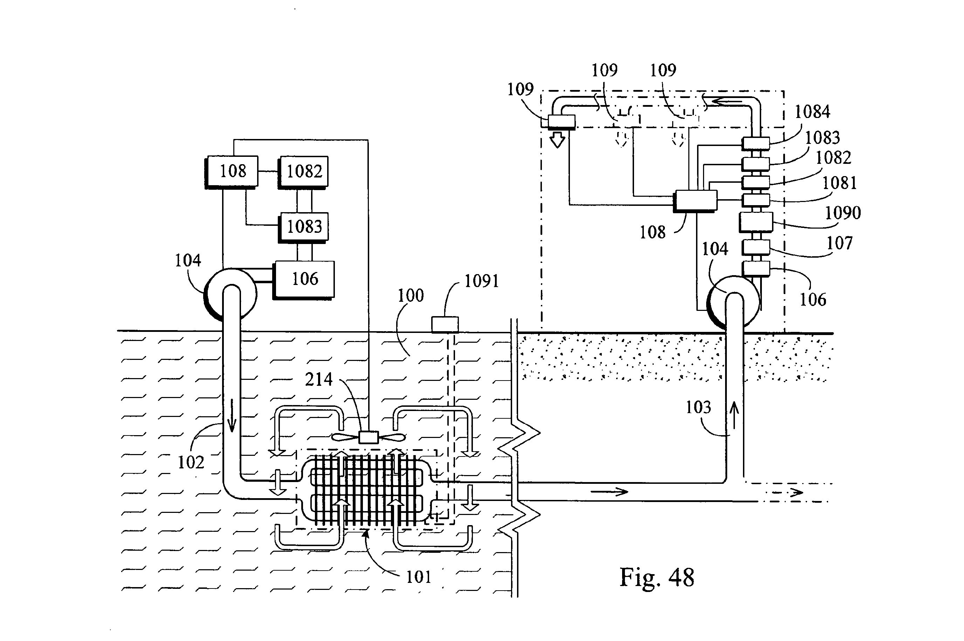

      Fig. 48 is a schematic view of the embodiment by taking Fig. 3 of the present invention as the example showing that the intermediate thermal storage (1000) is not installed while the temperature equalizer (101) is directly installed within the natural thermal matrix constituted by liquid or gaseous state material being installed with a fluid mixing pump (214) thereby allowing liquid or gaseous state material to be pumped by the fluid mixing pump (214) to produce temperature equalization effect on the temperature equalizer (101).

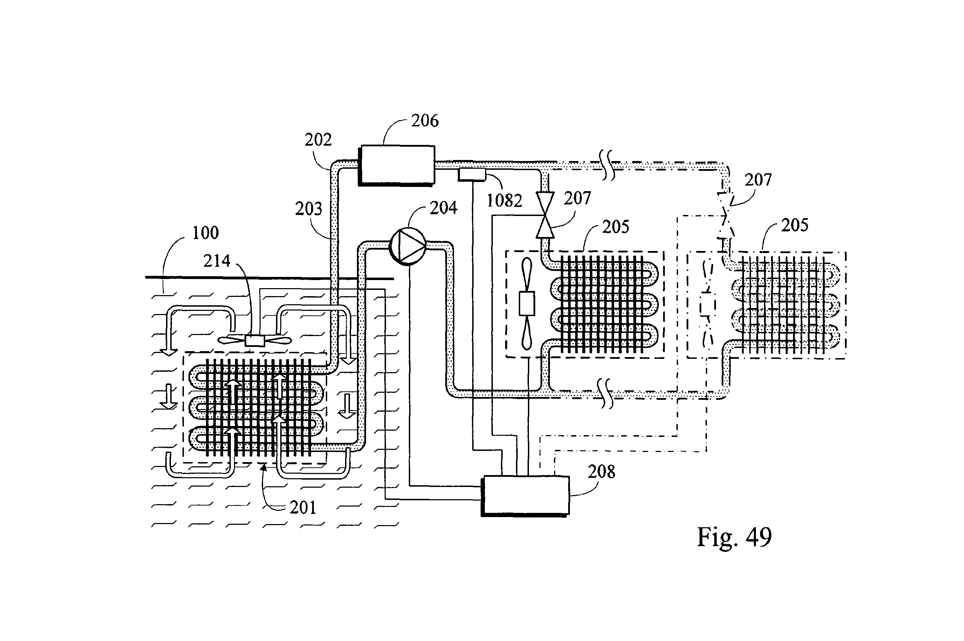

      Fig. 49 is a schematic view of the embodiment by taking Fig. 11 of the present invention as the example showing that the intermediate thermal storage (1000) is not installed while the active temperature equalizer (101) is directly installed within the natural thermal matrix (100) constituted by liquid or gaseous state material being installed with a fluid mixing pump (214) thereby allowing liquid or gaseous state material to be pumped by the fluid mixing pump (214) to produce temperature equalization effect on the active temperature equalizer (201).

As summarized from above descriptions, the system is through the utilization of thermal energy of the natural thermal matrix being combined with the intermediate thermal storage to constitute the temperature adjusting system, wherein the thermal energy for temperature adjustment from the nature is returned to the nature, so that in comparing with conventional air conditioning systems such as air conditioners, the latter one not only consumes huge energy but its produced waste heat also forms secondary pollutions; further, its usage of CFC also causes damages to the ozone layer and its supplied air quality and quantity are both limited. Contrarily, the present invention is perfectly natural comprising relevant devices utilizing only the matured components, therefore its usefulness and innovativeness are quite obvious, and your approval on this patent application according to law is greatly expected and appreciated.

The present invention also provides a system or equipment utilising the natural thermal matrix of stable temperature such as earth layers, earth surface, water pools, lakes and rivers for air conditioning applications, wherein an intermediate thermal storage is installed between the natural thermal matrix and the temperature equaliser, being respectively provided with flow ducts at the two ends thereof, wherein the intermediate thermal storage has both or either good thermal conductivity coefficient or a higher unit heat capacity ratio than that of the peripheral surrounding of the natural thermal matrix of stable temperature, the intermediate thermal storage being constituted by solid, colloidal, liquid or gaseous state material having a better thermal conductivity coefficient and a higher unit heat capacity ratio to absorb the thermal energy of the peripheral surrounding of the natural thermal matrix of stable temperature, wherein it can store more thermal energy and has a better thermal conductivity coefficient due to its characteristics of higher unit heat capacity ratio, so that it is advantageous to release larger thermal energy through the temperature equaliser to the air passing through the temperature equaliser, wherein it mainly comprises:
a temperature equaliser (101) constituted by heat conductors having an internal single flow circuit or multiple flow circuits in parallel connections, wherein one or more temperature equaliser (101) in series connection, parallel connection or series and parallel connection can be optionally installed inside, or integrally combined with, or neighbourly combined with the intermediate thermal storage (1000), wherein the intermediate thermal storage is installed between the temperature equaliser (101) and the natural thermal matrix (100), the temperature equaliser (101) being made of material with good thermal conductivity coefficient, wherein the inside and outside heat absorbing surfaces and the heat release surface appear as smooth flat surfaces or intercrossed shapes, or bended curvilinear structures; or the temperature equaliser (101) can be made of a material with a good thermal conductivity coefficient and can be constituted by linear or bended curve shaped flow ducting structures; or the temperature equaliser (101) can be made with outwardly-extending fins or column-shaped heat conducting structures at the exterior thereof as needed, or can be made with inwardly-extending fins or column-shaped heat conducting structures in the interior thereof as needed, thereby promoting temperature absorption and release effects, wherein the temperature equaliser (101) is made with at least one inlet and at least one outlet for respectively connecting a first flow duct (102) and a second flow duct (103);
the first flow duct (102) is constituted by at least one tubular flow duct for connection to the inlet of temperature equaliser (101) for transferring air into the temperature equaliser (101), thereby allowing the air to approach the temperature of the natural thermal matrix (100); wherein said air is taken from the external surrounding area of the inlet of first flow duct (102);
wherein the temperature equaliser (101) is made of material different from the natural thermal matrix at the peripheral outside thereof; the system further comprising at least one intermediate thermal storage (1000) being integrally combined, assembled or neighbourly installed with the temperature equaliser (101), or being filled in between the surroundings of one or several temperature equalisers (101) in series connection, parallel connection or series and parallel connection with the natural thermal matrix (100) at the peripheral outside thereof, wherein two or more integral combined bodies of the temperature equaliser (101) and the intermediate thermal storage (1000) which is dispersedly installed within the natural thermal matrix (100) being constituted by solid or liquid state thermal storages such as earth layers, earth surfaces, pools, lakes, rivers, deserts, ice bergs, of larger stable thermal storing capacities, while both or either of the thermal conductivity coefficient and the unit heat capacity ratio of the material of the intermediate thermal storage (1000) are greater than that or those of the peripheral outside the natural thermal matrix (100), wherein the intermediate thermal storage is constituted by solid, colloidal, liquid or gaseous state material, and can be directly installed within the natural thermal matrix (100), or it can be matchingly further installed with a container type shell structure of good thermal conductivity coefficient at the peripheral outside thereof according to selected material for thermal storage, or according to structural or environmental requirements; or a mesh, screen or porous type separation structure constituted by material of good thermal conductivity coefficient can be installed to limit or separate the related positions within the space between the intermediate thermal storage (1000) and the natural thermal matrix (100) to favour heat conduction; wherein heat conducting surfaces between the thermal storage material, the natural thermal matrix (100), and the temperature equaliser (101) appear as smooth flat surfaces or intercrossed shapes, or outwardly-extending fins or column type structures in order to promote the heat conductivity effect; while, due to the characteristics of the intermediate thermal storage having a better thermal conductivity coefficient and a better unit heat capacity ratio, a larger heat capacity of thermal energy can be stored by the intermediate thermal storage (1000) of higher unit heat capacity ratio to transfer maximum thermal energy to the temperature equaliser (101) under the conditions of same unit time and same temperature difference;
a second flow duct (103) constituted by at least one tubular flow duct for connection to the outlet of the temperature equaliser (101) for transferring air from the at least one outlet of the temperature equaliser (101) through the outlet(s) of the at least second flow duct (103) to enter at least one temperature-regulated space, including indoors of a building or a room, a structure itself, or an open space;
a pumping device (104) installed to connect every first flow duct (102), every second flow duct (103), or one of both the first flow duct (102) and the second flow duct (103) so as to pump air through the connected first flow duct (102), the temperature equaliser (101) and the connected second flow duct (103) to enter the temperature-regulated space; wherein the pumping device is constituted by a power pump driven by rotational mechanical power, or driven by a rotational electromagnetic effect of an electric motor, and relevant operative control interface for on/off or flow adjustment, or is constituted by a pneumatic pump driven by natural wind power or air flow of temperature difference;
wherein the system can be further optionally installed with the following auxiliary devices as needed, including a hazardous gas detecting device installed as required at the fresh air inlet and outlet; a filtration device with purification function, a flow rate adjusting device, a hazardous gas detecting device, a temperature detecting device, a flow meter, a gaseous matter adding device for adding useful gases or aromatic gaseous matters, an auxiliary adjusting device, a moisture-regulating device, or a water discharge device.

## Claims

1. A temperature equalisation air supply system comprising a temperature equaliser (101) disposed in a natural thermal matrix (100), a thermal storage device (1000) installed between the natural thermal matrix and the temperature equaliser, a first air flow duct (102) for transferring external air to an inlet of the temperature equaliser, a second air flow duct (103) for transferring air from an exit of the temperature equaliser to a space whose temperature is to be regulated, and a pump (104) for pumping external air through the first flow duct, the temperature equaliser and the second flow duct to said space, the system being such that the temperature of the air flow passing through the temperature equaliser is regulated and transferred to said space, thereby adjusting the temperature of said space by maximising the transfer of thermal energy to the temperature equaliser from the natural thermal matrix via the intermediate thermal storage device.

2. A system as claimed in claim 1, wherein the temperature equaliser (101) is constituted by heat conductors having an internal single flow circuit or multiple flow circuits in parallel connections, wherein one or more than one temperature equaliser (101) in series connection, parallel connection or series and parallel connection is installed inside, or integrally combined with, or neighbourly combined with the intermediate thermal storage device (1000), wherein the intermediate thermal storage is installed between the temperature equaliser (101) and the natural thermal matrix (100), the temperature equaliser (101) is made of a material with good thermal conductivity coefficient, wherein the inside and outside heat absorbing surfaces and the heat release surface appear as smooth flat surfaces or intercrossed shapes, or bended curvilinear structures; or the temperature equaliser (101) is made of material with good thermal conductivity coefficient and is constituted by linear or bended curve shaped flow ducting structures; or the temperature equaliser (101) is made with outwardly-extended fins or column-shaped heat conducting structures at the exterior thereof as needed, or is made with inwardly-extending fins or column-shaped heat conducting structures in the interior thereof as needed, thereby promoting temperature absorption and release effects, wherein the temperature equaliser (101) is made with at least one inlet and at least one outlet for respectively connecting to the first flow duct (102) and the second flow duct (103);

3. A system as claimed in claim 2, wherein the intermediate thermal storage device (1000) is constituted by the temperature equaliser (101) and material different from that of the natural thermal matrix at the peripheral outside thereof, wherein it has at least one intermediate thermal storage device (1000) integrally combined, assembled or neighbourly installed with the temperature equaliser (101), or being filled in between the surroundings of one or several temperature equalisers (101) in series connection, parallel connection or series and parallel connection and the natural thermal matrix (100) at the peripheral outside thereof, wherein, when two or more than two integral combined bodies of the temperature equaliser (101) and the intermediate thermal storage device (1000), the integral combined bodies are dispersedly installed within the natural thermal matrix (100); wherein the natural thermal matrix (100) being constituted by solid or liquid state thermal storages such as earth layers, earth surfaces, pools, lakes, rivers, deserts, ice bergs of larger stable thermal storing capacities, while both or either one of the thermal conductivity coefficient and the unit heat capacity ratio of the material of the intermediate thermal storage device (1000) are better than that or those of the natural thermal matrix (100) which is peripheral outside of the intermediate thermal storage device (1000), wherein the intermediate thermal storage device being constituted by solid, colloidal, liquid or gaseous state material is directly installed within the natural thermal matrix (100), or it can be matchingly further installed with a container type shell structure of good thermal conductivity coefficient at the peripheral outside thereof according to selected material for thermal storage, or according to structural or environmental requirements; or a mesh, screen or porous type separation structure constituted by material of good thermal conductivity coefficient is installed to limit or separate the related positions within the space between the intermediate thermal storage device (1000) and the natural thermal matrix (100) to favour heat conduction; wherein heat conducting surfaces between the thermal storage material, the natural thermal matrix (100), and the temperature equaliser (101) appear as smooth flat surfaces or intercrossed shapes, or outwardly-extending fins or column type structures in order to promote the heat conductivity effect; while, due to the intermediate thermal storage having a better thermal conductivity coefficient and a better unit heat capacity ratio, the absorption of thermal energy from the natural thermal matrix of stable temperature is facilitated, a larger heat capacity of thermal energy can be stored by the intermediate thermal storage (1000) of higher unit heat capacity ratio to transfer maximum thermal energy to the temperature equaliser (101) under the conditions of same unit time and same temperature difference.

4. A system as claimed in claim 2 or claim 3, wherein the pumping device (104) is installed to connect every first flow duct (102), every second flow duct (103), or each of the first flow ducts (102) and the second flow ducts (103) so as to pump air through the connected first flow duct (102), the temperature equaliser (101) and the connected second flow duct (103) to enter the temperature-regulated space; wherein the pumping device is constituted by a power pump driven by rotational mechanical power, or driven by the rotational electromagnetic effect of an electric motor, and relevant operative control interface for on/off or flow adjustment, or is constituted by a pneumatic pump driven by natural wind power or air flow of temperature difference.

5. A system as claimed in any one of claims 1 to 4, further comprising a filtration device (106) constituted by air flow filtration structures being capable of dismantling for dirt-removal cleaning, such as activated carbon filters to avoid piping blockage after long time use and for easy cleaning, wherein the filtration device is installed at the air suction inlet or discharge outlet, and is constituted by filtration devices including dust filtering mesh and hazardous gas filtration devices such as filtration devices containing activated carbons.

6. A system as claimed in any one of claims 1 to 5, further comprising a flow rate adjusting device (107), whose fresh air release rate can be operatively controlled by manual or mechanical power as required, wherein pumping air flow discharged by the pump can be adjusted by the adjusting device, or it can be constituted by valves or a gate device to adjust air flow at the discharge outlet.

7. A system as claimed in any one of claims 1 to 6, further comprising a hazardous gas detecting device (1081) installed at the air suction inlet and discharge outlet for detecting harmful gases to living beings such as human bodies, animals and plants or to articles in the temperature-regulated space so as to send out messages.

8. A system as claimed in any one of claims 1 to 7, further comprising a temperature detecting device (1082) installed in the temperature-regulated space for detecting temperature, or installed at the air flow inlet or outlet for detecting temperature so as to send out messages.

9. A system as claimed in any one of claims 1 to 8, further comprising a flow meter (1083) accumulatively calculating metering record of fresh air flow so as to display and send out messages for flow control or collecting fees, or for statistic management reference.

10. A system as claimed in any one of claims 1 to 9, further comprising a gaseous or micro-powder matter adding device (1084) constituted by an adding device operatively controlled by manual or mechanical power, or electric signal to send in gaseous matters beneficial to human bodies, animals or plants to the temperature-regulated space, or to send in micro-powdered matters or liquid mists carried by air flow, or to send in gaseous matters, micro-powdered matters or liquid mists beneficial to the conservation of articles, or to send in smell detectable gaseous matters, or micro-powdered matters, or liquid mists, this device being installed at the air flow inlet or the first flow duct (102), or installed at the temperature equaliser (101), or installed at the second flow duct (103), or installed at the air flow outlet, or installed at the interior or exterior of the temperature regulated space.

11. A system as claimed in any one of claims 1 to 10, further comprising an auxiliary adjusting device (109) which, if the temperature of the temperature equaliser (101) does not reach a desired value, installed on the route from the temperature equaliser (101) outlet via the second flow duct (103) to the outlet for entering the temperature-regulated space, or the auxiliary adjusting device (109) can be installed in the temperature-regulated space, thereby providing adjustment of the air flow entering the temperature-regulated space for temperature increase or decrease; wherein the auxiliary adjusting device (109) is constituted by an auxiliary temperature increase device with heating function, or by a cooling device with temperature reducing function, or by a temperature adjusting device with both functions.

12. A system as claimed in any one of claims 1 to 11, further comprising a moisture regulating device (1090) which is besides the interior of an air circuit constituted by the first flow duct (102) or the second flow duct (103) and the interior of temperature equaliser (101), can be optionally coated with desiccant material, the moisture regulating device (1090) can be further installed to eliminate, reduce or increase moisture, while the moisture can be manually operated or automatically modulated through moisture detection and setting.

13. A system as claimed in any one of claims 1 to 12, further comprising a water discharge device (1091) constituted by the pump and water discharge piping to draw out accumulated water inside the air flow circuit constituted by the first flow duct (102) or the second flow duct (103), or accumulated water inside the temperature equaliser (101).

14. A system as claimed in claim 13, further comprising an operative control unit (108) constituted by an electromechanical device, an electronic circuit device, a microprocessor as well as relevant software and operational interface circuits, wherein besides the operative function of temperature adjustment and air delivery performed by the operative control system in the temperature-regulated space, one or more functions can be added as needed, including: 1) a safety protection operative control function through connection to the hazardous gas detecting device (1081) installed at the inlet and every discharge outlet for sending out alarm and other emergency treatments such as cutting off gas flow, when hazardous gas exists and exceeds monitored values, wherein this hazardous gas detecting device is installed at input end and output end to detect hazardous gas inside the temperature regulated space; 2) it is for connection to the temperature detecting device (1082) and the flow meter (1083) for recording fresh air flow measurements and display functions for operatively controlling the pumping device (104), the flow rate adjusting device (107) and the auxiliary adjusting device (109) so as to modulate the temperature and inlet air flow on the temperature-regulated space; 3) it is used for operatively controlling the gaseous matter adding device (1084) to add gaseous matters beneficial to human bodies, animals or plants, or to add health care products or medicines carried by air flow, or to add gaseous matters, micro-powdered matters beneficial to conservation of articles, or to add smell detectable gases; 4) it is used for operatively controlling the moisture regulating device (1090) for adjusting the moisture of the first flow duct (102) at the air flow inlet or in the course of transferring fluid, the temperature equaliser (101), the second flow duct (103) at the air flow outlet and the temperature-regulated space; 5) it is used for operatively controlling the water discharge device (1091) to discharge the accumulated water inside the first flow duct (102), the temperature equaliser (101) and the second flow duct (103).

15. A system as claimed in any one of claims 1 to 14, wherein the system is such that a gradual temperature difference separation can be constituted in the temperature difference environment between the temperature-regulated space being installed with a conventional temperature-adjusting device and the outside surrounding, to include the following:
the required temperature of the temperature-regulated space is higher than the temperature of air flow entering the temperature-regulated space after passing through the temperature equaliser (101) for temperature adjustment; while, when the temperature of the air flow after passing through the temperature equaliser (101) is higher than the temperature of inlet air flow, then this system constitutes a preheating function on the air flow; or
the required temperature of the temperature-regulated space is lower than the temperature of air flow entering the temperature-regulated space after passing through the temperature equaliser (101) for temperature adjustment; while, when the fresh air temperature after passing through the temperature equaliser (101) is lower than the temperature of the inlet air flow, then this system constitutes a pre-cooling function of the air flow.
